(19) Europäisches Patentamt
European Patent Office
Office européen des brevets

(11) **EP 2 288 874 B1**

(12) **EUROPÄISCHE PATENTSCHRIFT**

(45) Veröffentlichungstag und Bekanntmachung des Hinweises auf die Patenterteilung:
**11.07.2018 Patentblatt 2018/28**

(21) Anmeldenummer: **09757488.3**

(22) Anmeldetag: **29.05.2009**

(51) Int Cl.:
**G01D 3/06** (2006.01)    **G01D 5/244** (2006.01)

(86) Internationale Anmeldenummer:
**PCT/EP2009/056649**

(87) Internationale Veröffentlichungsnummer:
**WO 2009/147107 (10.12.2009 Gazette 2009/50)**

(54) **VERFAHREN ZUR BESTIMMUNG ZUMINDEST EINES ERSTEN INTERNEN PARAMETERS EINES SENSORS**

METHOD FOR DETERMINING AT LEAST ONE FIRST INTERNAL PARAMETER OF A SENSOR

PROCÉDÉ DESTINÉ À DÉTERMINER AU MOINS UN PREMIER PARAMÈTRE INTERNE D'UN CAPTEUR

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **06.06.2008 DE 102008027221**

(43) Veröffentlichungstag der Anmeldung:
**02.03.2011 Patentblatt 2011/09**

(73) Patentinhaber: **Continental Teves AG & Co. oHG 60488 Frankfurt (DE)**

(72) Erfinder:
• **ECKRICH, Jörg**
  **65201 Wiesbaden (DE)**

• **KLAUSEN, Ralf**
  **60314 Frankfurt (DE)**
• **DIETZ, Timo**
  **65239 Hochheim am Main (DE)**
• **FRITZ, Wolfgang**
  **35398 Gießen (DE)**
• **JÖCKEL, Wolfgang**
  **36129 Gersfeld (DE)**

(56) Entgegenhaltungen:
DE-A1- 4 030 085        DE-A1- 4 434 978
DE-A1- 10 203 483        DE-A1-102007 026 786
US-A- 4 902 970         US-A1- 2003 222 637
US-B1- 6 504 360

**Beschreibung**

Die Erfindung betrifft ein Verfahren zur Bestimmung zumindest eines ersten internen Parameters eines Sensors gemäß Oberbegriff von Anspruch 1, einen Sensor gemäß Oberbegriff von Anspruch 11 sowie die Verwendung des Sensors in Kraftfahrzeugen.

In Druckschrift DE 44 34 978 A1 wird ein aktiver Sensor mit einer Zwei-Draht-Schnittstelle beschrieben, der einen Testmodus zur Erfassung einer kritischen Luftspaltlänge zwischen Sensor und Encoder aufweist, wobei zwischen dem normalen Betriebsmodus und diesem Testmodus durch Veränderung der Betriebsspannung umgeschaltet werden kann, indem der Sensor mit einem seriellen Spannungs-Bit-Muster angesteuert wird. Druckschrift DE 102 03 483 A1 schlägt einen Raddrehzahlsensor vor, der in unterschiedlichen Modi betrieben werden kann bzw. unterschiedliche Modi der Datenübertragung aufweist, wobei zwischen diesen Betriebsmodi durch eine externe Ansteuerung mittels eines zusätzlichen Eingangs umgeschaltet werden kann. Das Dokument US4902970 offenbart einen Sensor gemäß dem Stand der Technik. Die Erfindung hat sich die Aufgabe gestellt, ein Verfahren zur Bestimmung eines internen Parameters eines aktiven Sensors sowie einen aktiven Sensor vorzuschlagen, mit welchem in relativ zuverlässiger und einfacher Weise zumindest ein erster interner Parameter des Sensors in einem Sonderbetriebsmodus ermittelt wird.

Diese Aufgabe wird erfindungsgemäß gelöst durch das Verfahren gemäß Anspruch 1 sowie den Sensor gemäß Anspruch 11.

Der Erfindung liegt der Gedanke zu Grunde, einen Sensor und ein Verfahren zur Bestimmung zumindest eines ersten internen Parameters eines Sensors vorzuschlagen, wobei der Sensor eine elektrische Offsetquelle aufweist. Mit dieser elektrischen Offsetquelle wird insbesondere in einem Sonderbetriebsmodus eine Auswerteschaltung direkt oder indirekt so angesteuert, dass der erste interne Parameter des Sensors bestimmt werden kann.

Der erfindungsgemäße Sensor sowie das erfindungsgemäße Verfahren haben insbesondere die Vorteile, dass der zumindest erste interne Parameter des Sensors in relativ einfacher Weise in einem eingebauten Zustand des Sensors, beispielsweise als Raddrehzahlsensor in einem Kraftfahrzeug, wobei der Sensor zusätzlich mit einem Kunststoffgehäuse umspritzt ist, in einem Sonderbetriebsmodus bzw. Testmodus ermittelt bzw. berechnet werden kann. Es kann dabei beispielsweise die Signalamplitude eines Sensorelementdifferenzsignals bzw. das Sensorelementdifferenzsignal bestimmt werden, wobei dieser interne Parameter zur Berechnung der Einbaulage des Sensors, insbesondere hinsichtlich der Luftspaltlänge zwischen Sensor und einem zugeordneten Encoder, herangezogen wird bzw. werden kann. Alternativ kann ein Signal-Offset des Sensorelements bzw. ein Offset einer Messbrücke des Sensorelements in relativ einfacher Weise bestimmt werden.

Unter einem Sensorelement wird vorzugsweise ein Magnetfeldsensorelement verstanden, welches auf Basis des Hall-Effektes oder eines der verschiedenen magnetoresistiven Effekte, insbesondere des anisotropen magnetoresistiven Effektes, funktioniert.

Das Sensorelement umfasst zweckmäßigerweise eine Vollbrücke aus magnetoresistiven, sensitiven Strukturen bzw. Segmenten und erzeugt im Zuge eines erfassten Magnetfeldes, insbesondere eines sich ändernden, durch einen magnetischen Encoder erzeugtes und/oder moduliertes Magnetfeld, wenigstens zwei Sensorelementausgangssignale, welche den beiden Teilbrücken des Sensorelements zugeordnet sind.

Der Sensor kann zumindest in einem Normalbetriebsmodus und in einem Sonderbetriebsmodus betrieben werden. Diese Betriebsmodi weisen bevorzugt weitere Unterbetriebsmodi auf. Insbesondere umfasst der Sensor Umschaltmittel mit denen durch Umschaltung zwischen Unterbetriebsmodi eine Änderung der Zuordnung von Zusatzinformationen zu definierten Übertragungskanälen des Sensorausgangssignals vorgenommen werden kann, besonders bevorzugt wie eine Sensoranordnung bzw. ein entsprechendes Ausführungsbeispiel gemäß Druckschrift DE 102 03 483 A1. Ganz besonders bevorzugt wird eine Umschaltung zwischen Unterbetriebsmodi in Abhängigkeit vom Betriebszustand des Sensors und/oder in Abhängigkeit definierter, besonders bevorzugt durch den Sensor erfasster, Parameter durchgeführt.

Unter einem Normalbetriebsmodus des Sensors wird zweckmäßigerweise der Betrieb verstanden, in welchem die wenigstens eine bestimmungsgemäße Messgröße durch den Sensor erfasst und verarbeitet wird und insbesondere im Wesentlichen störungsfrei, als direkter oder indirekter Messwert, enthalten in einem Sensorausgangsignal, bereitgestellt wird.

Es ist bevorzugt, dass der Sensor im Sonderbetriebsmodus weiter misst und ein entsprechendes Sensorausgangssignal bereitstellt.

Vorzugsweise wird das Ausgangssignal des Sensors an eine elektronische Kontrolleinheit, insbesondere eine elektronische Kontrolleinheit eines Kraftfahrzeugregelungssystems, übertragen.

Es ist zweckmäßig, dass der Sensor so ausgelegt ist, dass die Umschaltung des Betriebsmodus, insbesondere aufgrund einer Ansteuerung an den Anschlussleitungen, automatisch durchgeführt wird.

Das Verfahren wird vorzugsweise weiterentwickelt, indem die Auswerteschaltung wenigstens ein erstes Komparatorelement umfasst, an dessen Eingängen mindestens ein erstes internes Signal und ein zweites internes Signal angelegt werden, welche die Information des ersten internen Parameters aufweisen, wobei zumindest einem dieser beiden internen Signale ein von der elektrischen Offsetquelle erzeugtes Offsetsignal überlagert wird, wonach zumindest aus dem Ausgangssignal des ersten Komparatorelements der wenigstens eine interne Parameter des Sensors direkt oder indirekt bestimmt wird. Das erste interne Signal ist dabei insbesondere ein erstes Sensorelementausgangssignal und das zweite interne Signal ist ein zweites Sensorelementausgangssignal oder ein Referenzsignal, wobei die Offsetquelle so angesteuert wird, dass der Wert des von dieser Offsetquelle erzeugten Offsetsignals in definierter Weise variiert, besonders bevorzugt stetig und/oder dreieckförmig, oder auf einen definierten Wert eingestellt wird, wodurch zumindest aus dem zeitlichen Verlauf und/oder dem Wert des Ausgangssignals des ersten Komparatorelements der erste interne Parameter des Sensors direkt oder indirekt bestimmt wird.

Als erster interner Parameter des Sensors wird bevorzugt die Signalamplitude eines Sensorelementdifferenzsignals oder der Wert eines internen Differenzsignals oder ein Signal-Offset des Sensorelements, bezüglich von zumindest zwei Teilsensorelementen oder einem Sensorelementausgangssignal zu einem Referenzsignal, ermittelt. Insbesondere wird zumindest einer der obigen Parameter als zusätzlicher, zweiter interner Parameter bestimmt. Besonders bevorzugt werden noch weitere interne Parameter bestimmt.

Der Sensor ist vorzugsweise als aktiver Sensor ausgebildet und weist mindestens zwei Anschlussleitungen auf, insbesondere jeweils mit einem Anschluss, wobei in Abhängigkeit der an den zwei Anschlussleitungen anliegenden Versorgungsspannung des Sensors die elektrische Offsetquelle so angesteuert wird, dass aus einem Sensorausgangssignal und/oder der an den zwei Anschlussleitungen anliegenden Versorgungsspannung in einer elektronischen Kontrolleinheit, welche an die zwei Anschlussleitungen des Sensors angeschlossen ist, die Signalamplitude eines Sensorelementdifferenzsignals oder ein Signal-Offset des Sensorelements ermittelt bzw. berechnet wird. Es ist besonders bevorzugt, dass der Sensor mittels Umpolen der an den zwei Anschlussleitungen anliegenden Versorgungsspannung des Sensors in den Sonderbetriebsmodus versetzt wird bzw. zwischen den Betriebsmodi umgeschaltet wird. Im Normalbetriebsmodus bzw. im normalen Betrieb des Sensors ist diesbezüglich ganz besonders bevorzugt die Versorgungsspannung mit vorgesehener Polung an diesen angeschlossen, also "+" an "+" und "-" an "-". Insbesondere ganz besonders bevorzugt ist der Normalbetriebsmodus des Sensors dadurch definiert, dass eine definierte Mindestversorgungsspannung dem Sensor zur Verfügung steht.

Das erste und das zweite interne Signal werden vorzugsweise einem zusätzlichen zweiten Komparatorelement zugeführt. Danach werden insbesondere die Ausgangssignale des ersten und des zweiten Komparatorelements gemeinsam bei der Bestimmung zumindest des ersten internen Parameters berücksichtigt.

Es ist bevorzugt, dass das erste und das zweite Sensorelementausgangssignal oder das erste Sensorelementausgangssignal und das Referenzsignal dem ersten Komparatorelement zugeführt werden und das erste und das zweite Sensorelementausgangssignal oder das zweite Sensorelementausgangssignal und das Referenzsignal dem zweiten Komparatorelement zugeführt werden. Dabei werden die Werte der beiden, dem jeweiligen Komparatorelement zugeführten Signale jeweils direkt oder indirekt miteinander vergleichen, wobei an einem Eingang des ersten Komparatorelements und an einem Eingang des zweiten Komparatorelements jeweils einem der zugeführten Signale das von der Offsetquelle erzeugte Offsetsignal überlagert wird.

Zur Ermittlung eines Signal-Offsets des Sensorelements wird bevorzugt das durch die Offsetquelle erzeugte Offsetsignal variiert, bis das erste Komparatorelement zweimal schaltet oder das erste und das zweite Komparatorelement jeweils zumindest einmal schalten, wonach aus dem Werten des Offsetsignals zu diesen Schaltzeitpunkten und/oder aus dem zeitlichen Abstand der aufeinanderfolgenden Schaltvorgänge des einen oder der beiden Komparatorelemente und/oder aus der zeitlichen Änderung des Offsetsignalwerts der Offset des Sensorelements direkt oder indirekt bestimmt wird. Besonders bevorzugt wird das Offsetsignal an einem einzelnen Komparatorelement eine definierte Zeit verstärkt und eine definierte Zeit abgeschwächt, wobei eine potentielle Schalthysterese dieses Komparatorelements dabei ganz besonders bevorzugt berücksichtigt wird und dabei der Wert einer Hystereseschwelle zusätzlich berechnet werden kann. Bei Verwendung eines ersten und eines zweiten Komparatorelements wird zweckmäßigerweise jeweils das Offsetsignal so variiert, dass bei dem einen Schaltvorgang des jeweiligen Komparatorelements eine potentielle Schalthysterese keine Rolle spielt, also insbesondere wird das Offsetsignal entweder verstärkt oder abgeschwächt. Alternativ vorzugsweise wird das Offsetsignal so variiert, dass bei dem einen Schaltvorgang des jeweiligen Komparatorelements eine Schalthysterese wirksam wird, wodurch der Wert einer Hystereseschwelle zusätzlich berechnet werden kann.

Zur Ermittlung des Sensorelementdifferenzsignals wird zweckmäßigerweise die Bewegung eines Encoders durch das Sensorelement erfasst, wobei der zeitliche Verlauf der Signalamplituden bzw. Signalwerte des ersten und/oder zweiten Sensorelementausgangssignals jeweils von der Relativbewegungsgeschwindigkeit des Encoders zum Sensor abhängen und insbesondere periodisch alternierend die Signalamplitude des einen Sensorelementausgangssignals größer ist als die Signalamplitude des anderen Sensorelementausgangssignals und wobei das durch die Offsetquelle erzeugte Offsetsignal variiert oder in definierter Weise eingestellt wird. Besonders bevorzugt wird das Offsetsignal solange, insbesondere stetig, variiert, bis das Ausgangssignal des ersten und/oder eines anderen Komparatorelements konstant bleibt oder das erste und/oder das zweite Komparatorelement anfängt und/oder aufhört zu schalten, oder dass das durch die Offsetquelle erzeugte Offsetsignal innerhalb eines definierten Werte-Intervalls variiert wird. Danach wird das Sensorelementdifferenzsignal wenigstens in Abhängigkeit des Wertes des Offsetsignals, bei welchem das erste und/oder das zweite Komparatorelement anfängt und/oder aufhört zu schalten, berechnet. Ganz besonders bevorzugt wird das Sensorelementdifferenzsignal zumindest in Abhängigkeit von mindestens zwei Werten des Offsetsignals berechnet, bei welchen das erste und/oder das zweite Komparatorelement anfängt und/oder aufhört zu schalten, wodurch eine mögliche Schalthysterese des wenigstens einen Komparatorelements, zumindest bei einer im Wesentlichen symmetrischen Hysterese, nicht in die Berechnung des Sensorelementdifferenzsignals einfließt. Bei zwei nicht mit einer Hysterese behafteten Schaltvorgängen ist die Bestimmung des Sensorelementdifferenzsignals nicht von einer Hysterese der Komparatorelemente abhängig. Falls die beiden Schaltvorgänge jeweils mit einer Hysterese behaftet sind, welche allerdings jeweils den gleichen Wert aufweist, ist diese Hysterese im Wesentlichen nicht für die Berechnung des Sensorelementdifferenzsignals relevant. Die Bestimmung des Sensorelementdifferenzsignals bei Erfassung von Encoderbewegungen ermöglicht eine Bestimmung bzw. Berechnung des Luftspaltes zwischen Encoder und Sensor. Hierdurch kann die relative Einbaulage zueinander bestimmt werden und herausgefunden werden, ob der Luftspalt gering genug ist und somit noch eine definierte Luftspaltreserve aufweist. Diese Information ist insbesondere zur Beurteilung der Funktionsfähigkeit und -sicherheit von Raddrehzahlerfassungssystemen in Kraftfahrzeugen wichtig.

Es ist bevorzugt, dass zunächst der Signal-Offset des Sensorelements als erster interner Parameter ermittelt wird und anschließend das Sensorelementdifferenzsignal, wobei im Zuge der Berechnung des Sensorelementdifferenzsignals der Signal-Offset des Sensorelements berücksichtigt wird.

Zweckmäßigerweise wird ein Spitze-Spitze-Wert des Sensorelementdifferenzsignals ermittelt, insbesondere, wenn sich das Sensorelementdifferenzsignal auf zwei zueinander um im Wesentlichen 180° phasenverschobene Sensorelementausgangssignale bezieht, welche besonders bevorzugt im Wesentlichen die gleiche Amplitude aufweisen.

Die Auswerteschaltung des Sensors weist bevorzugt zumindest ein erstes Komparatorelement auf, an dessen Eingängen mindestens ein erstes und ein zweites internes Signal anliegen, wobei diese internen Signale die Information des mindestens einen internen Parameters aufweisen und wobei die Leitung eines dieser internen Signale mit der elektrischen Offsetquelle direkt oder indirekt verbunden ist. Das erste interne Signal ist dabei insbesondere ein Sensorelementausgangssignal und das zweite interne Signal ein Referenzsignal oder ein zweites Sensorelementausgangssignal.

Die Offsetquelle ist zweckmäßigerweise mittels des Umschaltmoduls mit der Auswerteschaltung verbunden.

Der Sensor weist vorzugsweise wenigstens zwei Anschlussleitungen auf und wird über diese Anschlussleitungen mit elektrischer Energie versorgt, wobei der Sensor eine Spannungsversorgungsregelungseinheit aufweist, welche eine im Wesentlichen auf eine definierten Spannungswert geregelte Versorgungsspannung bereitstellt, und zumindest das Sensorelement und zumindest Teile der Auswerteschaltung an diese Spannungsversorgungsregelungseinheit angeschlossen sind.

Das Umschaltmodul umfasst vorzugsweise einen Schalter, mit welchem die elektrische Offsetquelle mit der Auswerteschaltung bzw. mit zumindest einem Teil der Auswerteschaltung verbunden oder von dieser getrennt werden kann. Insbesondere ist das Umschaltmodul an die beiden Anschlussleitungen des Sensors angeschlossen, an welchen die Versorgungsspannung des Sensors anliegt. Besonders bevorzugt weist das Umschaltmodul eine Gleichrichterschaltung, insbesondere eine Brückengleichrichterschaltung auf, welche insbesondere aus vier Mos-FETs zur Vermeidung des bei Dioden auftretenden Spannungsabfalls ausgebildet ist. Die Gleichrichterschaltung ist eingangsseitig mit den beiden Anschlussleitungen des Sensors verbunden. Die Gleichrichterschaltung stellt an ihren Ausgängen auch nach Umpolen der Versorgungsspannung stets eine gleichgerichtete Spannung bereit, welche als Versorgungsspannung wenigstens bestimmter Komponenten des Sensors verwendet wird, bei denen ein Umpolen ihrer Versorgungsspannung vermieden werden muss. Die Gleichrichterschaltung hat zusätzlich die Wirkung eines allgemeinen Verpolschutzes.

Durch die mindestens zwei Betriebsmodi und deren zweckmäßiger Umschaltung mittels Umpolen der Versorgungsspannung kann mit dem Sensor insbesondere sowohl eine Unterspannungserkennung als auch ein Testmodus realisiert werden. Die Ansteuerung des Sensors zur Betriebsmodusumschaltung mittels des Umpolens der Versorgungsspannung ist eine besonders zuverlässig erkennbare und einfache Ansteuerung. Das Risiko, dass diese Art der Ansteuerung unerwünschterweise, beispielsweise durch Einkopplung eines Störsignals, im Betrieb durchgeführt wird, ist gering.

Das Umschaltmodul weist zweckmäßigerweise zumindest einen Moduskomparator zur Identifikation der Polung der Versorgungsspannung des Sensors auf, wobei der Moduskomparator insbesondere eingangsseitig mit den beiden Anschlussleitungen des Sensors direkt oder indirekt, besonders bevorzugt mittels eines Spannungteilers, verbunden ist. Alternativ vorzugsweise erfasst der Moduskomparator die Versorgungsspannung des Sensors dadurch, dass der Spannungsabfall über einem Gleichrichterbauelement, insbesondere über einer Diode oder einem Transistor der Brückengleichrichterschaltung, erfasst wird.

Die Energieversorgungsanschlüsse des Moduskomparators und/oder der Auswerteschaltung sind vorzugsweise mit den Ausgangsanschlüssen der Gleichrichterschaltung verbunden, wodurch eine Unabhängigkeit der Energieversorgung obiger Komponenten von der Polung der Sensorversorgungsspannung erreicht wird.

Es ist bevorzugt, dass das Umschaltmodul eine Schalteinrichtung, insbesondere als Schalter ausgebildet, zum Umschalten des Betriebsmodus aufweist, welche in Abhängigkeit des Ausgangs der ersten Komparatorschaltung zur Identifikation der Polung der Versorgungsspannung des Sensors und in Abhängigkeit des Ausgang bzw. der Ausgänge der mindestens einen Reseteinrichtung den Betriebsmodus des Sensors umschaltet. Hierdurch kann die Auswerteschaltung sowohl in Abhängigkeit der Polung des Sensors als auch in Abhängigkeit der Versorgungsspannungsamplitude angesteuert bzw. ein interner Betriebsmodus oder Unterbetriebsmodus eingestellt werden.

Die Auswerteschaltung umfasst vorzugsweise wenigstens zwei Komparatorelemente, wobei jeweils an einem der Eingänge jedes der Komparatorelemente die elektrische Offsetquelle über das Umschaltmodul angeschlossen ist. Insbesondere weist die Auswerteschaltung zwei Hystereseschaltungen auf, in denen ein erstes und ein zweites Sensorelementausgangssignal des mindestens einen Sensorelements oder alternativ andere interne Signale verarbeitet werden, wobei diese beiden Hystereseschaltungen parallel geschaltet sind und die erste Hystereseschaltung das erste Komparatorelement umfasst und die zweite Hystereseschaltung das zweite Komparatorelement, wobei an den Eingängen des ersten und zweiten Komparatorelements das erste Sensorelementausgangssignal und das zweite Sensorelementausgangssignal oder eines der beiden Sensorelementausgangssignale und ein Referenzsignal anliegen und wobei die Eingangssignale des ersten und zweiten Komparatorelements bezüglich des nichtinvertierenden und des invertierenden Eingangs zueinander vertauscht anliegen und jeweils ein Eingang des jeweiligen Komparatorelements, insbesondere der nichtinvertierende Eingang, über das Umschaltmodul mit der elektrischen Offsetquelle verknüpft ist.

Die Auswerteschaltung umfasst vorzugsweise eine Schnittstellenschaltung zur Einstellung eines definierten Ausgangssignals des Sensors, wobei diese Schnittstellenschaltung in Abhängigkeit des jeweiligen Betriebsmodus angesteuert wird.

Es ist bevorzugt, dass zumindest das erste Komparatorelement ausgangsseitig an eine digitale Ausgangsschaltung angeschlossen ist, welche zumindest eine Stromquelle umfasst und das Sensorausgangssignal als ein digitales Stromsignal erzeugt.

Die Auswerteschaltung weist zweckmäßigerweise zumindest ein erstes Auswahlelement auf, welches insbesondere als Schalter ausgebildet ist, wobei dieses erste Auswahlelement so ausgebildet und angeschlossen ist, dass es wenigstens zwei Eingangssignalleitungen der Auswerteschaltung oder zwei interne Signalleitungen an zwei definierten Punkten innerhalb der Auswerteschaltung miteinander verbinden kann und dass dadurch der Wert bzw. der Signal-Offset eines internen Differenzsignals bestimmt werden kann, zumindest im Wesentlichen abhängig von den im jeweiligen Signalpfad liegenden Teilen der Auswerteschaltung zwischen dem ersten Auswahlelement und dem ersten Komparatorelement.

Das Verfahren zur Bestimmung des zumindest einen internen Parameters wird vorzugsweise erweitert, indem die Signalamplitude eines Sensorelementdifferezausgangssignals, welches einem Differenzsignal aus einem ersten Sensorelementausgangssignal eines ersten Teil-Sensorelements und einem zweiten Sensorelementausgangssignal eines zweiten Teil-Sensorelements oder einem Differenzsignal entsprechend verstärkter Signale entspricht, wobei die beiden Teil-Sensorelemente insbesondere Teilbrücken eines als Vollbrücke ausgebildeten Magnetfeldsensorelements sind, oder indem ein Offset von Teil-Sensorelementen des Sensorelements bzw. des Sensorelements selbst, aus dem zeitlichen Verlauf des Sensorausgangssignals in einer elektronischen Kontrolleinheit ermittelt bzw. berechnet wird, welche an die zwei Anschlussleitungen des Sensors angeschlossen ist. Besonders bevorzugt wird dabei ein erstes und ein zweites Sensorelementausgangssignal jeweils einem ersten und einem zweiten Komparator der Auswerteschaltung zugeführt, wobei die Signalamplitude dieser Signale jeweils direkt oder indirekt miteinander verglichen werden und wobei an einem Eingang des ersten Komparators und an einem Eingang des zweiten Komparators jeweils einem dieser Sensorelementausgangssignale ein Offsetsignal überlagert wird, welches durch die elektrische Offsetquelle erzeugt wird. Ganz besonders bevorzugt wird zur Ermittlung des Sensorelementdifferenzsignals die Bewegung eines, insbesondere magnetischen, Encoders durch das Sensorelement erfasst. Dabei hängt der zeitliche Verlauf der Signalamplituden des ersten und zweiten Sensorelementausgangssignals jeweils von der Relativbewegungsgeschwindigkeit des Encoders zum Sensor ab. Diese beiden Signalamplituden sind hierbei periodisch alternierend größer bzw. kleiner als die andere, also einmal ist die eine für ein definiertes Zeitintervall größer als die andere und umgekehrt. Die Versorgungsspannung des Sensors, welche an den beiden Anschlussleitungen des Sensors anliegt wird nun variiert oder in definierter Weise eingestellt, wodurch in Abhängigkeit dieser Versorgungsspannung die Amplitude des mindestens einen durch die Offsetquelle erzeugten Offsetsignals variiert bzw. in definierter Weise eingestellt wird.

Die Berechnung des ersten internen Parameters und/oder weiterer interner Parameter wird bevorzugt zumindest teilweise in einer an den Sensor angeschlossenen elektronischen Kontrolleinheit durchgeführt. Alternativ vorzugsweise werden diese Berechnungen in der Auswerteschaltung des Sensors durchgeführt.

Die Auswerteschaltung weist bevorzugt eine Verstärkerschaltung, insbesondere eine Instrumentenverstärkereinheit aus, durch welche zumindest das erste und das zweite Sensorelementausgangssignal verstärkt werden.

Unter einem Sensorelementausgangssignal wird entweder das noch unverstärkte oder alternativ das bereits verstärkte Sensorelementausgangssignal verstanden.

Unter einem Referenzsignal wird zweckmäßigerweise ein Gleichsignal verstanden, dessen Spannungswert insbesondere gleich einem Nullpunktspotential zu einem Massepotential gewählt ist.

Das wenigstens eine Offsetsignal, als Ausgangssignal der elektrischen Offsetquelle, weist vorzugsweise einen Wert, besonders bevorzugt einen Strom- und/oder Spannungswert auf, der im Wesentlichen proportional zur Versorgungsspannung des Sensors ist.

Die elektrische Offsetquelle ist bevorzugt als spannungsgesteuerte elektrische Quelle, insbesondere als spannungsgesteuerte Stromquelle ausgebildet, welche einen oder mehrere, besonders bevorzugt gleichartige, Stromsignale mit definierter Stromamplitude erzeugt bzw. bereitstellt.

Es ist bevorzugt, dass der Sensor ein Raddrehzahlsensor ist und entsprechend ausgelegt ist.

Es ist zweckmäßig dass der Sensor zumindest teilweise als integrierte Schaltung, insbesondere als ASIC, ausgebildet ist.

Vorzugsweise ist der komplette Sensor, insbesondere bestimmte Teile wie die Sensorelemente und/oder die Auswerteschaltung und das Umschaltmodul auf einem Chip integriert.

Der Sensor weist zweckmäßigerweise genau zwei Anschlussleitungen auf und ist insbesondere mittels genau zwei Verbindungsleitungen mit einer externen elektronischen Kontrolleinheit verbunden. Die Verbindungsleitungen sind dabei mit den Anschlussleitungen verbunden. Über diese jeweiligen zwei Leitungen werden besonders bevorzugt sowohl die elektrische Versorgungsenergie des Sensors als auch die sensorischen Informationen Übertragen. Außerdem wird ganz besonders bevorzugt über die jeweiligen beiden Leitungen die Information zu einer Modusumschaltung des Sensors an den Sensor übertragen.

Die Erfindung betrifft auch die Verwendung des erfindungsgemäßen Sensors, insbesondere als Raddrehzahlsensor, in Kraftfahrzeugen.

Der erfindungsgemäße Sensor und das erfindungsgemäße Verfahren sind zum Einsatz in Kraftfahrzeugen besonders deshalb geeignet, weil die Bestimmung eines internen Parameters aufgrund der sicherheitskritischen Anforderungen besonders präzise durchgeführt werden muss. Dies kann in relativ einfacher Weise durch den Sensor und das Verfahren gewährleistet werden.

Der erfindungsgemäße Sensor wird bevorzugt in sicherheitskritischen Einsatzbereichen, insbesondere in Kraftfahrzeugen, verwendet. Dabei wird er besonders bevorzugt zur Erfassung von linearen und/oder rotatorischen Bewegungen verwendet. Ganz besonders bevorzugt wird ein Testbetriebsmodus des Sensors nach Einbau des Sensors in die jeweilige Sensoranordnung, insbesondere beim Hersteller, genutzt, um die Einbauqualität und die Luftspaltreserve beurteilen zu können. Hierdurch kann die Betriebsqualität und -sicherheit von lowcost-Sensoren gesteigert werden, welche über keine Möglichkeit der eigenständigen Erfassung der Luftspaltlänge verfügen.

Weitere bevorzugte Ausführungsformen ergeben sich aus den Unteransprüchen und der nachfolgenden Beschreibung von Ausführungsbeispielen an Hand von Figuren.

Es zeigen in schematischer Darstellung

Fig. 1 eine beispielhafte Auswerteschaltung, die mittels eines Umschaltmoduls von einer elektrischen Offsetquelle angesteuert wird,

Fig.2 ein Ausführungsbeispiel mit zwei Komparatorelementen,

Fig. 3 einen beispielhaften Raddrehzahlsensor,

Fig. 4 beispielhafte Signalverläufe zu Bestimmung des Sensorelementdifferenzsignals bzw. der Brückenamplitude in Abhängigkeit der Luftspaltlänge zwischen Sensor und Encoder,

Fig. 5, 6 beispielhafte Signalverläufe zur Bestimmung des Offsets des Sensorelements bzw. der Brücke des Sensorelements, und

Fig. 7 ein Ausführungsbeispiel einer Auswerteschaltung mit einem Auswahlelement.

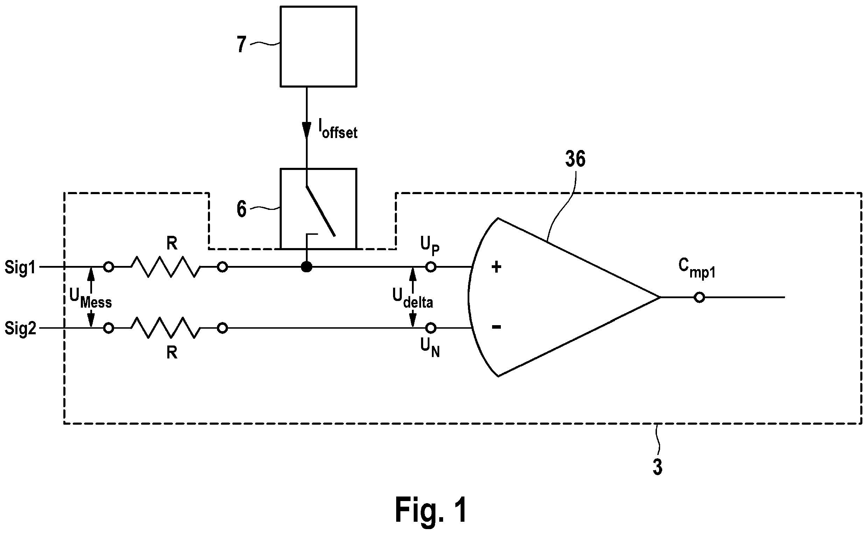

In Fig. 1 ist ein Ausführungsbeispiel dargestellt, welches Auswerteschaltung 3 umfasst, die von elektrischer Offsetquelle 7 über Umschaltmodul 6 angesteuert wird. Ein erstes und ein zweites internes Signal, beispielgemäß ein erstes und ein zweites Sensorelementausgangssignal Sig1, Sig 2, werden über jeweils einen Widerstand R einem ersten Komparatorelement 36 zugeführt. Offsetquelle 7 ist als spannungsgesteuerte Stromquelle ausgebildet, welche das Offsetsignal $I_{offset}$ treibt, das über Umschaltmodul 6, in Abhängigkeit des Betriebsmodus Sig1 überlagert werden kann.

Sensorelementausgangssignale Sig1, Sig 2 weisen jeweils einen Wechselanteil $U_{AC}$ und einen Gleichanteil $U_{DC}$ auf. Zwischen den Mittelwerten beider Signale existiert beispielgemäß ein Signal-Offset $U_{Offset}$. Dieser teilt sich beispielgemäß symmetrisch zum gemeinsamen Gleichanteil $U_{DC}$ auf Sig1 Und Sig2 bzw. kann normalerweise entsprechend definiert werden, da hier eine rein differentielle Betrachtung vorliegt und der Absolutwert des Gleichanteils unerheblich ist.

Es gilt:

$$U_{Sig1} = U_{AC1} + U_{DC} + U_{Offset}/2 \qquad\qquad (1)$$

$$U_{Sig2} = U_{AC2} + U_{DC} - U_{Offset}/2 \qquad\qquad (2)$$

Im Sonderbetriebsmodus trägt $I_{offset}$ über R eine Spannung $I_{off-set}*R$ zur Spannung $U_P$ am nichtinvertierenden Eingang des ersten Komparatorelements 36 bei. Dabei wird beispielgemäß angenommen, dass der Ausgangswiderstand der Sensorelementausgänge sehr viel kleiner als R ist und der Eingangswiderstand des Komparatorelements 36 sehr viel größer als R ist.

Für die Eingangsknoten $U_P$, $U_N$ an Komparatorelement 36 ergibt sich demzufolge:

$$U_P = U_{Sig1} + I_{Offset} * R = U_{AC1} + U_{DC} + U_{Offset}/2 + I_{Offset} * R \qquad (3)$$

$$U_N = U_{Sig2} = U_{AC2} + U_{DC} - U_{Offset}/2 \qquad\qquad (4)$$

Das differentielle Eingangssignal des Komparatorelements ergibt sich entsprechend zu:

$$U_{delta} = U_P - U_N = (U_{AC1} - U_{AC2}) + U_{Offset} + I_{Offset} * R \qquad (5)$$

Komparatorelement 36 ist beispielgemäß hysereselos ausgebildet, wodurch die Schaltschwelle sich wie folgt ergibt:

$$U_{delta} = 0 \Leftrightarrow (U_{AC1} - U_{AC2}) + U_{Offset} + I_{Offset} * R = 0 \qquad (6)$$

Der Signal-Offset kann mit Hilfe von Gleichung (6) ermittelt werden. Die Wirkung des Sensorelementes auf $U_{AC}$ muss hierbei unterbunden werden, es wird beispielgemäß also nicht die Bewegung eines magnetischen Encoders durch den Sensor erfasst, so dass $U_{AC1} = U_{AC2} = 0$ ist. Eingesetzt in (6) ergibt sich entsprechend:

$$U_{Offset} + I_{Offset} * R = 0$$

Das Komparatorausgangssignal Cmp1 wechselt also bzw. das Komparatorelement 36 schaltet, wenn gilt:

$$U_{Offset} = -I_{Offset} * R \qquad\qquad (7)$$

Da Offsetsignal $I_{Offset}$ durch Offsetquelle 7 erzeugt wird und entsprechend bekannt ist, kann der Signal-Offset $U_{Offset}$ berechnet werden.

Nach der Ermittlung des Signal-Offsets wird anschließend das Sensorelementdifferenzsignal ermittelt und der bekannte Signal-Offset dabei berücksichtigt.

Aufgrund des bereits bekannten Signal-Offsets werden die Sensorelementausgangssignale vereinfacht wie folgt angenommen:

$$U_{Sig1} = U_{AC1} + U_{DC}$$

$$U_{Sig2} = U_{AC2} + U_{DC}$$

bzw. die an Komparatorelement 36 anliegenden Spannungen

$$U_P = U_{AC1} + U_{DC} + I_{Offset} * R$$

$$U_N = U_{AC2} + U_{DC}$$

Gleichung (6) vereinfacht sich also zu:

$$U_{delta} = U_P - U_N = U_{AC1} - U_{AC2} + I_{Offset} * R$$

Komparatorelement 36 schaltet also, wenn gilt:

$$I_{Offset} * R = U_{AC2} - U_{AC1} \tag{8}$$

Im Zuge der Ermittlung des Sensorelementdifferenzsignals wird die Bewegung eines magnetischen Encoders durch das Sensorelement erfasst, wodurch $U_{AC1}$ und $U_{AC2}$ ungleich Null sind. Deshalb ist am Ausgang Cmp1 des Komparatorelements 36 ein periodischer Wechsel zu beobachten bzw. Komparatorelement schaltet periodisch, solange Gleichung (8) erfüllt ist.

Beispielsweise wird Offsetsignal $I_{Offset}$ beginnend mit einem Wert kleiner - $|U_{AC2} - U_{AC1}|$ erhöht bzw. verstärkt, wodurch Ausgangssignal Cmp1 des Komparatorelements 36 zunächst nicht schaltet, also zunächst konstant bleibt. Sobald die Bedingung $I_{Offset} * R > - |U_{AC2} - U_{AC1}|$ erfüllt ist, beginnt Komparatorelement 36 so lange zu schalten, bis die Bedingung $I_{Offset} * R > |U_{AC2} - U_{AC1}|$ erfüllt ist.

Der Wertebereich des Offsetsignals $\Delta I_{Offset}$ in welchem die elektrische Offsetquelle 7 variiert werden kann, während ein periodisches Ausgangssignal Cmp1 des Komparatorelements 36 beobachtbar ist, bzw. Komparatorelement 36 schaltet, ergibt sich demnach zu:

$$\Delta I_{Offset} * R = 2 * |U_{AC2} - U_{AC1}| \tag{9}$$

Für den Falls, dass Sig1 und Sig 2 zwei gegeneinander um 180° phasenverschobene Sensorelementausgangssignale mit gleicher Amplitude sind $U_{AC} = U_{AC1} = -U_{AC2}$ ergibt sich der Wertebereich des Offsetsignals $\Delta I_{Offset}$, in welchem Komparatorelement 36 schaltet, wie folgt, wobei $U_{AC\_pp}$ der Spitze-Spitze-Wert des Sensorelementdifferenzsignals $U_{Mess}$ ist:

$$\Delta I_{Offset} * R = 4 * U_{AC} = 2 * U_{AC\_pp}$$

Also lässt sich der Spitze-Spitze-Wert des Signals $U_{Mess}$ wie folgt ermitteln:

$$U_{AC\_pp} = (\Delta I_{Offset} * R)/2$$

In einem alternativen Ausführungsbeispiel, bei welchem eins der dem Komparatorelement 36 zugeführten internen Signale, beispielgemäß Sig1, ein definiertes Referenzsignal ist, wird die Amplitude des Sensorelementdifferenzsignals $U_{Mess}$ ermittelt, da hier der $U_{AC1}$-Term gleich Null ist und somit heraus fällt.

In zusätzlichen Ausführungsbeispielen ist sowohl bezüglich des Verfahrens zu Signal-Offset-Messung, als auch zur Ermittlung des Sensorelementdifferenzsignals eines der internen Signale ein Referenzsignal, dessen Wechselanteil $U_{AC}$ gleich Null ist. Solch ein Referenzsignal wird beispielgemäß von der Auswerteschaltung erzeugt.

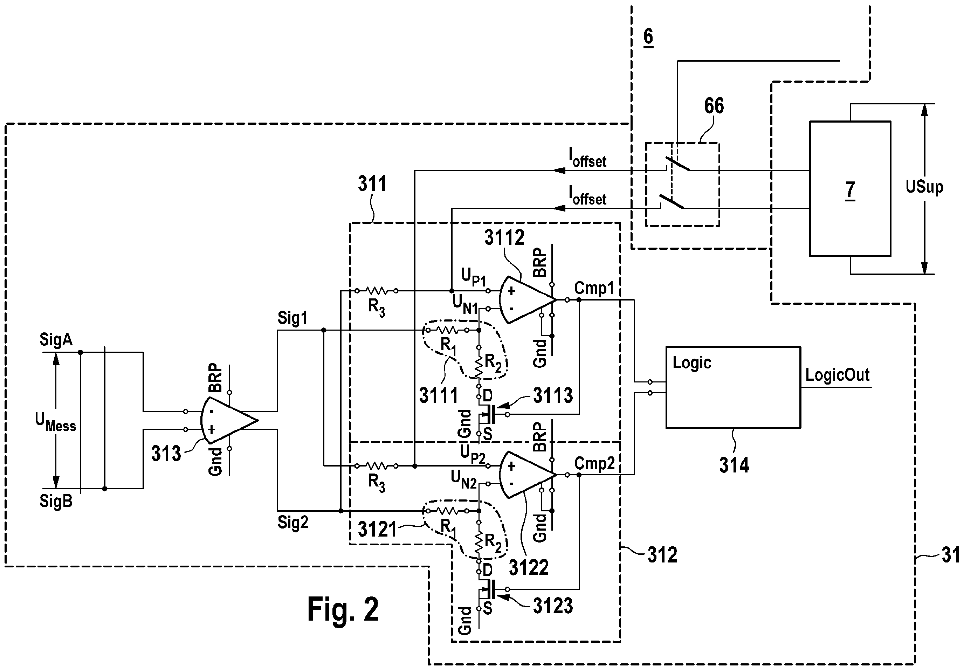

Fig. 2 zeigt eine beispielhafte Signalverarbeitungseinheit 31 der Auswerteschaltung. An diese Signalverarbeitungseinheit 31 sind eingangsseitig die um 180° zueinander phasenverschobenen Sensorelementausgangssignale SigA und SigB bzw. deren Spannungsdifferenz $U_{Mess}$ bzw. das Sensorelementdifferenzsignal $U_{Mess}$ angeschlossen. Signalverarbeitungseinheit 31 weist eine Verstärkerschaltung 313 zur Verstärkung dieser Sensorelementausgangssignale SigA, SigB auf. Verstärkerschaltung 313 ist dabei beispielgemäß als Instrumentenverstärker-Schaltung ausgebildet. Zusätzlich weist Signalverarbeitungseinheit 31 zwei Hystereseschaltungen 311 und 312 und eine Logikschaltung 314 auf, welche beispielsweise ein nicht dargestelltes UND-Gatter, das eingangsseitig mit den Ausgängen der Hystereseschaltungen 311 und 312 verbunden ist und ein Toggle-Flip-Flop, das eingangsseitig mit dem UND-Gatter verbunden ist, aufweist. Hystereseschaltungen 311 und 312 umfassen jeweils ein Komparatorelement 3112, 3122, als Operationsverstärker ausgebildet, einen Spannungsteiler 3111, 3121, jeweils mit einem ersten Widerstand R1 und einem zweiten Widerstand R2 sowie einen Transistor 3113, 3123. Die Operationsverstärker sind alle gemeinsam an die Spannungsversorgung der Sensorbrücke BRP (Bridge Supply Plus) angeschlossen, welche durch eine nicht dargestellte Spannungsversorgungsregelungseinheit bzw. eine Spannungsstabilisierungseinheit bereitgestellt wird.

Magnetfeldsensorelemente, insbesondere magnetoresistive Sensorelemente, haben unter anderem die Eigenschaft, dass mit zunehmender Temperatur die Signalamplitude geringer wird. Deshalb ist es wünschenswert, bei der Umwandlung von analogen in digitale Signale, die Schalthysterese über die Temperatur der Signalspannung anzupassen. Dies geschieht über die, die Hysterese bestimmenden, Spannungsteiler 3111 bzw. 3121, deren beide Widerstände aus unterschiedlichen Materialien mit unterschiedlichen Temperaturkoeffizienten ausgebildet sind. Durch entsprechende Dimensionierung lässt sich die Temperaturabhängigkeit der Hysteresespannung an die Temperaturabhängigkeit der Signalspannung anpassen. Außerdem weist Signalverarbeitungseinrichtung 31 bzw. deren Hystereseschaltungen 311 und 312 eine asymmetrische Hysterese bezüglich der beiden Komparatorelemente 3112, 3122 auf. Diese Komparatorelemente 3112, 3122 schalten jeweils beim Nulldurchgang bzw. dem Kreuzungspunkt der Amplituden der beiden Ausgangssignale der Verstärkerschaltung 313 Sig1 und Sig2, woraus ein vom übrigen Signalverlauf dieser beiden Signale unabhängiges Schalten der beiden Komparatorelemente 3112 und 3122 resultiert. Komparatorelement 3112 schaltet beispielsweise jeweils bei einer Änderung der Polung der an seinen Klemmen anliegenden Differenzspannung. Übersteigt die Amplitude von Sig2 (liegt an "+" von Komparatorelement 3112 an) die Amplitude von Sig1 (liegt an "-" von Komparatorelement 3112 an), so stellt sich am Ausgang von Komparatorelement 3112 eine "1" bzw. ein high-Signal ein. Diese "1" schaltet Transistor 3113, in diesem Fall ein Mos-FET, durch, worauf sich an den Widerständen R1 und R2 jeweils eine Spannung, sich ergebend aus der Spannung von Sig1 und entsprechend den Widerstandswerten des Spannungsteilers 3111, einstellt. Durch das Durchschalten von Mos-FET 3113 liegt an der dem Komparatorelement gegenüberliegenden Klemme des Widerstandes R2 das Potential GND an, welches das negative Potential der Versorgungsspannung der Magnetfeldsensorbrücke bzw. der nicht dargestellten Versorgungsspannungsregelungseinheit ist. Hierdurch wird das am invertierenden Eingang des Komparatorelements 3112 anliegende Potential negativer. Für ein Umschalten des Komparatorelements auf ein "0"-Ausgangssignal reicht dem entsprechend nicht der Anstieg der Amplitude von Sig1 auf den Wert der Amplitude von Sig2, weil Sig2 aufgrund des aktivierten Spannungsteilers nicht voll am invertierenden Eingang Komparatorelements 3112 anliegt. Diese Hysterese würde im Fall einer höheren Temperatur der Magnetfeldsensorbrücke, woraus eine im Allgemeinen geringere Amplitude der Signale Sig1 und Sig2 resultiert, dazu führen, dass ein Umschalten des Komparatorelements 3112 deutlich später als bei einer durchschnittlichen Temperatur oder ab einer bestimmten Temperatur gar nicht mehr stattfinden würde, weil der maximale Amplitudenunterschied zwischen Sig2 und dem Anteil von Sig1, welcher am invertierenden Eingang von Komparatorelement 3112 anliegt, geringer wäre als die Hystereseschwelle. Aus diesem Grund weisen die Widerstände R1 und R2 des Spannungsteilers einen unterschiedlichen Temperaturkoeffizienten auf. In diesem Ausführungsbeispiel ist Widerstand R1 im Wesentlichen unabhängig von der Temperatur ausgelegt und Widerstand R2 weist einen positiven Temperaturkoeffizienten auf, um den beispielgemäß negativen Temperaturkoeffizienten des Amplitudenverlaufs der Sensorelementbrücke auszugleichen. Dadurch liegt an Widerstand R2 bei steigender Temperatur eine höhere Spannung und ein im Verhältnis höheres Potential am invertierenden Eingang ("-") Komparatorelements 3112 an. Hierdurch wird gewährleistet, dass die Amplitudendifferenz zwischen Sig2 und dem Anteil von Sig1, welcher am invertierenden Eingang von Komparatorelement 3112 anliegt, auch bei relativ starker Erwärmung die Hystereseschwelle periodisch überschreitet. Die Funktionsweise der Hystereseschaltung 312 ist entsprechend und bezüglich der Signale Sig1 und Sig2 invertierend zum Schaltungszweig des Komparatorelements 3112. Die Ausgangssignale der Hystereseschaltungen 311 und 312 überlappen sich bezüglich des High-Levels bzw. des Zustands "1" aufgrund der Hysterese, weil die negative Flanke des einen Signals später kommt, als die positive Flanke des anderen Signals. Als Ausgangssignal LogicOut der Signalverarbeitungseinrichtung 31 ergibt sich somit ein im Wesentlichen rechteckförmiges Wechselsignal, dessen Periode mit der Bewegungsgeschwindigkeit bzw. Drehzahl des Encoders korreliert und dessen Flanken zeitlich mit den Nulldurchgängen des Eingangssignals korrelieren.

An die nichtinvertierenden Eingänge der Komparatorelemente 3112 und 3122 kann nun in einem Sonderbetriebsmodus jeweils ein Potential angelegt werden, welches sich aus dem Offsetsignal $I_{Offset}$ durch den Widerstand R3 ergibt, woraus sich an den beiden nichtinvertierenden Eingängen die Potentiale $U_{P1}$ und $U_{P2}$ aus der Überlagerung dieses Offsetpotential mit Sig2 bzw. Sig1 ergeben. Die Offsetstromsignale $I_{Offset}$ werden durch elektrische Offsetquelle 7 erzeugt, die an die Versorgungsspannung USup des Sensors angeschlossen ist und beispielgemäß als doppelte spannungsgesteuerte Stromquelle ausgebildet ist. Offsetquelle 7 wird beim Umschalten des Sensors in einen Sonderbetriebsmodus mit der Auswerteschaltung bzw. der Signalverarbeitungseinrichtung 31 mittels eines Offsetschalters 66 eines Umschaltmoduls 6 verbunden bzw. im Normalbetriebsmodus von dieser getrennt.

Die Sensorelementausgangssignale SigA, SigB weisen jeweils einen Gleichanteil $U_{DC}$, einen beispielgemäß vorhandenen Signal-Offset $U_{Offset}$, der sich symmetrisch auf beide Signale aufteilt, da nur deren Differenz betrachtet wird und im Fall, dass der Sensor einen zu diesem relativ bewegten, magnetischen Encoder erfasst, einen Wechselanteil $U_{AC}$ auf:

$$\text{SigA} = -U_{AC} + U_{DC} + U_{Offset}/2 \tag{10}$$

$$\text{SigB} = U_{AC} + U_{DC} - U_{Offset}/2 \tag{11}$$

Instrumentenverstärker-Schaltung 313 verstärkt die Differenz der Eingangssignale SigA und SigB mit dem Verstärkungsfaktor v und der Übertragungsfunktion:

$$U_{Sig1} = -\text{SigA}*(v-1)/2 + \text{SigB}*(v+1)/2 \tag{12}$$

$$U_{Sig2} = \text{SigA}*(v+1)/2 - \text{SigB}*(v-1)/2 \tag{13}$$

Aus den Gleichungen(10),(11) und (12),(13) ergibt sich

$$U_{Sig1} = -(-U_{AC} + U_{DC} + U_{Offset}/2)*(v-1)/2 + (U_{AC} + U_{DC} - U_{Offset}/2)*(v+1)/2$$
$$= v*U_{AC} - v*U_{Offset}/2 + U_{DC} \tag{14}$$

und

$$U_{Sig2} = (-U_{AC} + U_{DC} + U_{Offset}/2)*(v+1)/2 - (U_{AC} + U_{DC} - U_{Offset}/2)*(v-1)/2$$
$$= -v*U_{AC} + v*U_{Offset}/2 + U_{DC} \tag{15}$$

In Abhängigkeit von der Versorgungsspannung USup des Sensors wird die Spannung $U_{P1}$ und $U_{P2}$ mittels elektrischer Offsetquelle 7, welche beispielhaft als spannungsgesteuerte, doppelte Stromquelle ausgebildet ist, jeweils an den nichtinvertierenden Eingängen der Komparatorelemente 3112, 3122 eingestellt. Dabei ergeben sich die an erstem Komparatorelement 3112 eingangsseitig anliegenden Spannungen:

$$U_{P1} = U_{Sig2} + I_{Offset} * R_3 = -v*U_{AC} + v*U_{Offset}/2 + U_{DC} + I_{Offset} * R_3$$

und

$$U_{N1} = U_{Sig1} = v*U_{AC} - v*U_{Offset}/2 + U_{DC}$$

Die an erstem Komparatorelement 3112 eingangsseitig anliegende Differenzspannung $U_{Delta1}$ beträgt demnach:

$$U_{Delta1} = U_{P1}-U_{N1} = -2*v*U_{AC} + v*U_{Offset} + I_{Offset} * R_3 \tag{16}$$

Entsprechend beträgt die an zweitem Komparatorelement 3122 anliegende Differenzspannung $U_{Delta2}$:

$$U_{Delta2} = U_{P2}-U_{N2} = 2*v*U_{AC} - v*U_{Offset} + I_{Offset} * R_3 \tag{17}$$

Erstes Komparatorelement 3112 schaltet von "low" nach "high" für $U_{Delta}= 0$. Also genau dann, wenn gilt:

$$I_{Offset1} * R_3 = 2*v*U_{AC} - v*U_{Offset} \qquad (18)$$

Im Rahmen eines beispielhaften Verfahrens zur Messung des Signal-Offsets des Sensorelements wird kein relativ zum Sensor bewegter magnetischer Encoder erfasst. Die Wechselanteile $U_{AC}$ sind also gleich Null.

Digitale Logikschaltung 314 ist beispielgemäß so ausgebildet, dass der Übergang des Komparatorelementausgangs Cmp1 von Low nach High, einen Wechsel des Signalverarbeitungseinheits-Ausgangssignals LogicOut von Low nach High (High nach Low) bewirkt. Umgekehrt führt der Wechsel des Komparatorelementsausgangs Cmp2 von Low nach High zu einem Wechsel des Signalverarbeitungseinheits-Ausgangssignals LogicOut von High nach Low.

Auf diese Weise kann ein Ausgangssignalpuls erzeugt werden, welches durch die Low-nach-High - Wechsel beider Komparatoren bestimmt wird. Bei diesen Schaltvorgängen spielt also jeweils die Hysterese keine Rolle bzw. ist abgeschaltet und geht in die Messung des Signal-Offsets beispielgemäß nicht ein. Daraus folgt:

Erstes Komparatorelement 3112 schaltet bei:

$$I_{Offset1} * R_3 = -v * U_{Offset}$$

Zweites Komparatorelement 3122 schaltet bei:

$$I_{Offset2} * R_3 = +v * U_{Offset}$$

Die Differenz beider notwendigen Offsetsignale $I_{Offset1}$, $I_{Offset2}$, welche proportional der Differenz zweier Versorgungsspannungen USup ist, entspricht:

$$\Delta I_{Offset} * R_3 = 2*v*U_{Offset}$$
$$\Leftrightarrow U_{Offset} = \Delta I_{Offset} * R_3 /2 /v \qquad (19)$$

Diese Offsetsignaldifferenz $\Delta I_{Offset}$ bzw. die Werte der beiden Offsetsignale $I_{Offset1}$, $I_{Offset2}$ zu den jeweilgen Schaltzeitpunkten bzw. entsprechende Differenz der Versorgungsspannung wird gespeichert und zur Ermittlung des Signal-Offsets $U_{Offset}$ verwendet.

Zur Messung des Sensorelementdifferenzsignals $U_{Mess}$ bzw. einer Amplitudenmessung des Sensorelements wird ein relativ zum Sensor bewegter magnetischer Encoder erfasst. Hierbei wird beispielgemäß ein vorher bereits ermittelter Signal-Offset berücksichtigt, wobei dieser in der folgenden Berechnung des Sensorelementdifferenzsignals zur Vereinfachung gleich Null gesetzt wird, da er als konstanter Wert bereits bekannt ist.

Die beiden Komparatorelemente 3112, 3122 schalten solange sich deren Eingangssignale "schneiden" bzw. sich deren Werte im zeitlichen Verlauf bezüglich des größer-kleiner-Verhältnisses abwechseln bzw. solange die Differenz der Werte der Signale, welche an den Eingängen der Komparatorelemente 3112, 3122 anliegen, bezüglich des Vorzeichens abwechselt.

Da durch den Wechsel von "low" nach "high" am Ausgang des jeweiligen Komparatorelements die Hysterese beispielgemäß eingeschaltet und somit der negative Eingang zusätzlich reduziert wird, verringert sich der Offsetstellbereich in welchem der Ausgang schaltet, um eben den Wert der Hysterese $U_{Hyst}$.

Offsetsignal $I_{Offset}$ wird von einem definierten negativen Wert zu einem definierten positiven Wert innerhalb einer definierten Zeit verändert.

Dabei gilt für das Offsetsignal im negativen Wertebereich: $I_{Offset} < 0$:

$U_{P1} < U_{N1} \rightarrow$ Hysterese ist aus, $U_P$ steigt mit steigendem $I_{Offset}$ bis $U_{Delta}=0$ wird.

$$U_{P1} = -v*U_{AC} + U_{DC} - I_{Offset\_low} * R_3$$

$$U_{N1} = U_{Sig1} = v*U_{AC} + U_{DC}$$

$$U_{P1} = U_{N1} \Leftrightarrow I_{Offset\_low} * R_3 = -2*v*U_{AC}$$

Dabei fängt beispielgemäß Komparatorelement 3112 bei obigem Wert des Offsetsignals $I_{Offset\_low}$ an zu schalten.

Für das Offsetsignal $I_{Offset}$ im positiven Wertebereich gilt: $I_{Offset} > 0$:

$U_{P1} > U_{N1} \rightarrow$ Hysterese ist an, $U_P$ steigt weiter mit steigendem Offset, bis $U_{Delta}$ nicht mehr Null werden kann, bzw. gerade noch Null wird.

$$U_{P1} = -v*U_{AC} + U_{DC} + I_{Offset\_High} * R_3$$

$$U_{N1} = U_{Sig1} - U_{Hyst} = v*U_{AC} + U_{DC} - U_{Hyst}$$

$$U_{P1} = U_{N1} \Leftrightarrow I_{Offset\_High} * R_3 = 2*v*U_{AC} - U_{Hyst}$$

Dabei hört Komparatorelement 3112 bei obigem Wert des Offsetsignals $I_{Offset\_High}$ auf zu schalten.

Daraus ergibt sich das Sensorelementdifferenzsignal $U_{Mess}$, welches gleich dem Spitze-Spitze-Wechselanteil $U_{AC\_pp}$ ist, wie folgt:

$$I_{Offset\_High} - I_{Offset\_low} = \Delta I_{Offset} = (4*v*U_{AC} - U_{Hyst}) / R_3 =$$

$$(2*v*U_{AC\_pp} - U_{Hyst}) / R_3$$

$$\Leftrightarrow U_{AC\_pp} = (\Delta I_{Offset} * R_3 + U_{Hyst}) /2 /v = U_{Mess} \qquad (20)$$

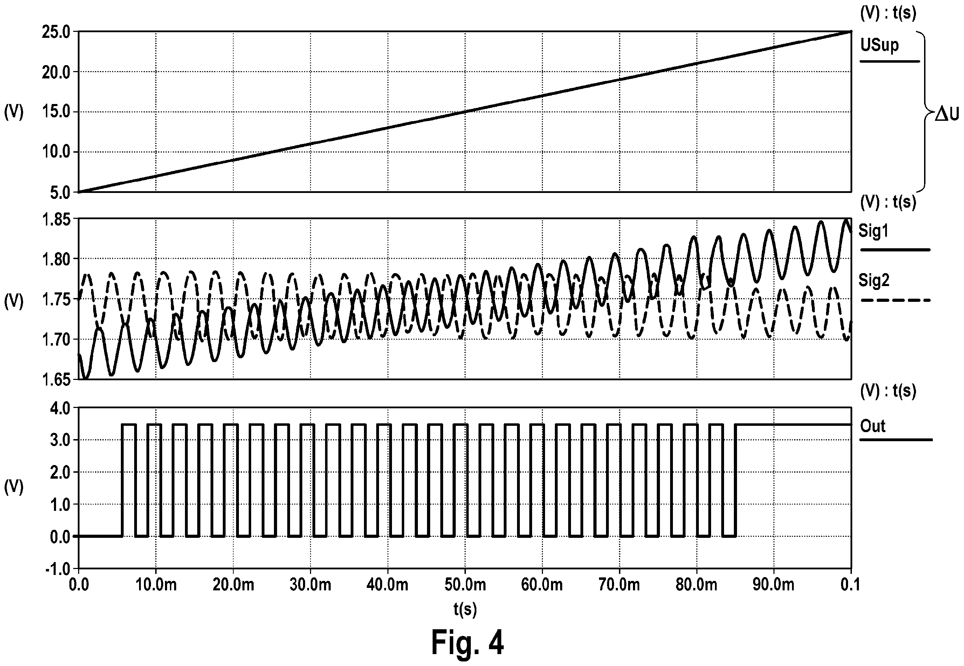

Anhand von Fig. 4 und Fig. 2 kann das beispielhafte Verfahren zur Bestimmung des Sensorelementdifferenzsignals $U_{Mess}$ bzw. der Signalamplitude des Sensorelements bei Erfassung von Encoderbewegungen, mit welchem der Sensor über einen Luftspalt beispielgemäß magnetisch gekoppelt ist, nachvollzogen werden. Um sicherzustellen, dass die Auswerteschaltung und alle weiteren Komponenten des Sensors mit ausreichend hoher Spannung versorgt sind, wird der Arbeitspannungs- bzw. der Versorgungsspannungsbereich im Sonderbetriebsmodus bzw. Testmodus auf 5V bis 25V festgelegt.

Mittels der Versorgungsspannung USup, welche die Offsetquelle steuert und von welcher der Wert des Offsetsignals direkt abhängig ist, können die Potentiale der bereits verstärkten Sensorelementausgangssignale $U_{Sig1}$ bzw. Sig1 und $U_{Sig2}$ bzw. Sig2 so gegeneinander verschoben werden, dass ein Signal größer ist als das andere, unabhängig vom zeitlichen Verlauf innerhalb zumindest einer Periode des jeweiligen Signals, resultierend aus der erfassten Encoderbewegung, wobei diese Periode beispielgemäß einem magnetischen Nord-Südpolpaar bei einem alternierend magnetisierten Encoder oder alternativ einem Zahn-Lücke-Paar bei einem zahnradförmigen, ferromagnetischen Encoder entspricht. Anders ausgedrückt "kreuzen" oder "schneiden" sich beide Sensorelementausgangssignale Sig1, Sig2 ab einer definierten Mindestoffsetspannung an einem der Komparatorelementeingänge nicht mehr.

In dem dargestellten Beispiel wurde die Offsetquelle so dimensioniert bzw. eingestellt, dass bei einer Versorgungsspannung USup von 15V die durch das Offsetsignal erzeugte Offsetspannung 0V beträgt. Bei 5V Versorgungsspannung beträgt die Offsetspannung -100mV und bei 25V Versorgungsspannung entsprechend +100mV.

Der Zusammenhang zwischen Offsetsignal $I_{Offset}$ und Versorgungsspannung USup stellt sich beispielgemäß wie folgt dar:

$$I_{Offset} * R_3 = (USup - 15V) * 10mV/V$$

bzw.

$$\Delta I_{Offset} * R_3 = \Delta USup * 10mV/V \qquad (21)$$

Der Bereich, in dem am Sensorausgang ein Ausgangssignalwechsel des digitalen Sensorausgangssignals Out detektierbar ist, das Sensorausgangssignal also eine Periodizität aufweist und nicht konstant ist, hängt von der an den Komparatoren der Signalverarbeitungseinrichtung anliegenden, bereits verstärkten Sensorelementausgangssignale Sig1 und Sig2 sowie der Hysterese der jeweiligen Hystereseschaltungen ab. Der Wert der Hysterese der beiden Hystereseschaltungen ist beispielgemäß durch die beiden Widerstände $R_1$ und $R_2$, wie in Fig.2 beschrieben, bestimmt:

$$U_{Hyst} = U_{Sig} * R_2 / (R_1 + R_2) - U_{Sig}$$

In diesem Beispiel sind die Widerstandswerte zu $R_1$=1kΩ und $R_2$=69kΩ gewählt. Bei einem Gleichanteil von $U_{Sig}$ mit 1,75V ergibt sich die Hysterese zu $U_{Hyst}$ = 25mV. Mit Hilfe der Versorgungsspannung USup des Sensors lässt sich nun der Wert des Sensorelementdifferenzsignals $U_{Mess}$ berechnen, indem man Gleichung (21) in Gleichung (20) einsetzt:

$$U_{Mess} = U_{AC\_pp} = (\Delta USup * 10mV/V + U_{Hyst})/2/v \qquad (22)$$

Bei dem in Fig. 4 dargestellten Beispiel ist ein Ausgangssignalwechsel bei Versorgungsspannungen USup von 6V bis 22V zu detektieren. Verstärkungsfaktor v der Verstärkerschaltung 313 ist beispielgemäß v = 10. Mit Hilfe von Formel (22) ergibt sich damit ein Wert des Sensorelementdifferenzsignals $U_{Mess}$ von $U_{Mess}$ = 9,25 mV.

Durch Variation der Versorgungsspannung $U_{Sup}$ wird beispielgemäß die Amplitude des Sensorelementdifferenzsignals $U_{Mess}$, welche von der Luftspaltlänge zwischen Encoder und Sensor abhängig ist, gemessen bzw. berechnet werden.

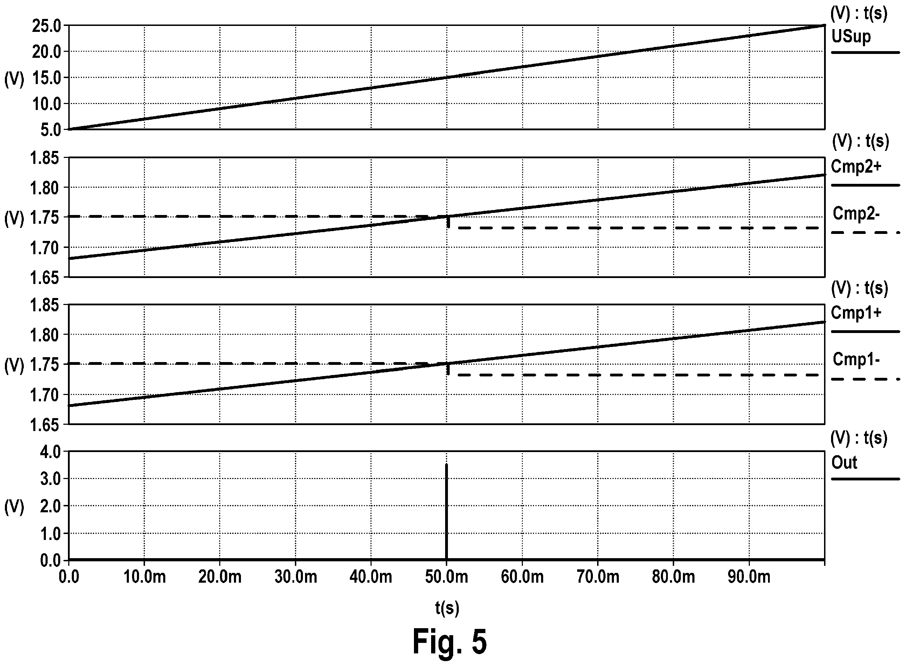

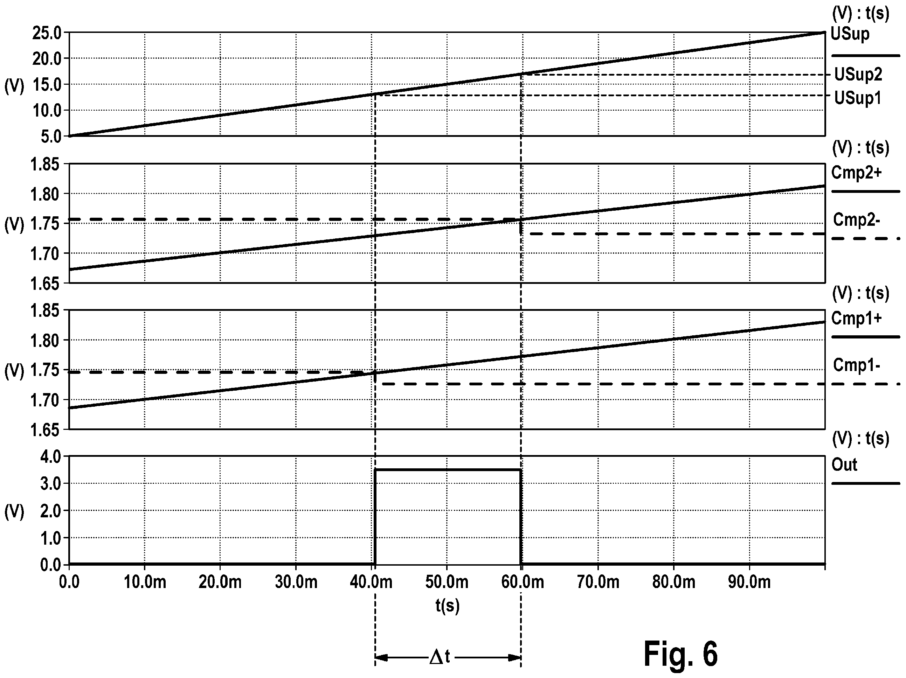

Die Bestimmung bzw. Ermittlung eines Offsets des Sensorelements wird anhand der Fig. 5 und 6 beispielhaft erläutert. Dabei wird beispielgemäß der Offset der Messbrücke des Sensorelements berechnet.

Dazu wird wie bei der Bestimmung des Sensorelementdifferenzsignals bzw. der Amplitude dieses Signals mittels der Versorgungsspannung USup des Sensors und der elektrischen Offsetquelle die Spannung $U_P$ an den nichtinvertierenden Komparatoreingängen der Auswerteschaltung variiert. Hierbei darf beispielgemäß kein externes, insbesondere durch einen Encoder erzeugtes und/oder moduliertes, Magnetfeld vom Sensorelement erfasst werden.

Für die Bestimmung des Offsets des Sensorelements bzw. des Brückenoffsets wird der Arbeitspannungsbereich der Versorgungsspannung USup durchlaufen. Ist die Brückenspannung offsetfrei, schalten beide Komparatoren bei der gleichen Versorgungsspannung, da die beiden Sensorelementausgangssignale ein jeweils gleich großes Potential an den Komparatoreingängen erzeugen. Dieses gleichzeitige Schalten der beiden Komparatoren ist, wie in Fig. 5 veranschaulicht, durch den Peak des Ausgangssignals Out erkennbar. Die dazugehörigen Signalverläufe der an den Komparatoreingängen anliegenden Potentiale Cmp2+, Cmp2- und Cmp1+, Cmp1 - sowie der Verlauf der Versorgungsspannung USup sind ebenfalls aus Fig. 5 ersichtlich.

Sind dagegen die beiden Sensorelementausgangssignale um einen Offset gegeneinander verschoben, schalten beide Komparatoren bei unterschiedlichen Versorgungsspannungen USup1 und USup2. Dadurch zeigt sich am Ausgangssignal jeweils ein Signalwechsel beim Schalten des ersten Komparators und wieder beim Schalten des zweiten Komparators. In Fig. 6 sind diesbezüglich die entsprechenden Signalverläufe dargestellt, wobei die Signalverläufe der an den Komparatoreingängen anliegenden Potentiale mit Cmp2+, Cmp2- und Cmp1+, Cmp1 - bezeichnet sind.

Die Komparatorausgänge der Auswerteschaltung erzeugen entsprechend das Ausgangssignal Out.

Die Verschiebung der Schaltzeitpunkte der beiden Komparatoren des Beispiels aus Fig. 6 ist ein Maß für die Offsetverschiebung. Beispielgemäß schalten die beiden Komparatorelemente im Sonderbetriebsmodus bei einer Versorgungsspannung USup von 13V bzw. 17V, also einer Versorgungsspannungsdifferenz von ΔUSup = 4V. Mit Hilfe der Verstärkung der Verstärkerschaltung 313 lässt sich dann der Signal-Offset der Brücke bestimmen. Bei einer gewählten Verstärkung von v = 10 ergibt sich beispielgemäß bei Einsetzung der Gleichung (21) in Gleichung (19) der Signal-Offset $U_{Offset}$ bzw. die Offsetspannung der Sensorelement-Brücke zu $U_{Offset}$ = 2mV.

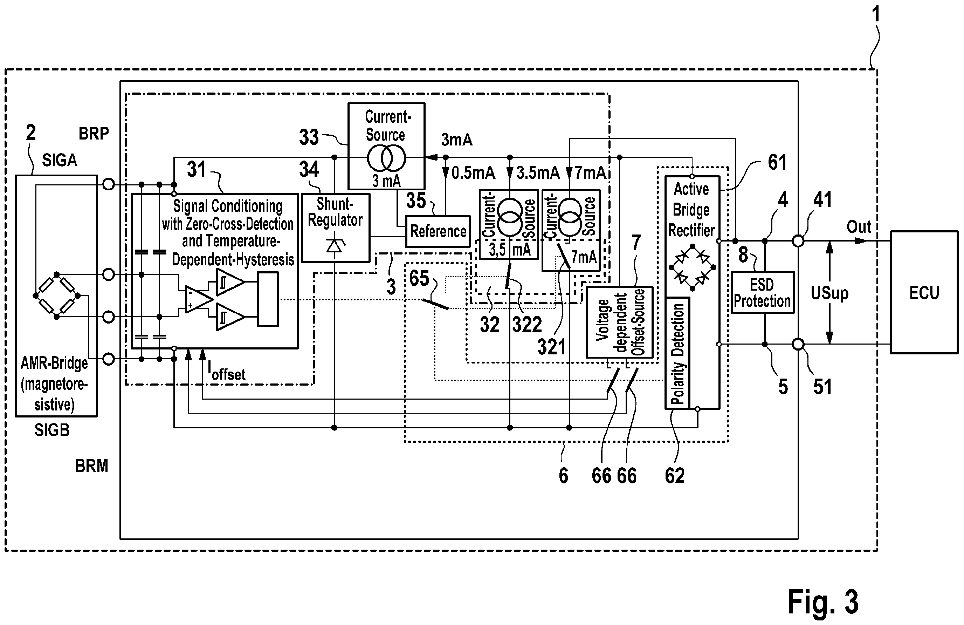

Fig. 3 veranschaulicht einen beispielhaften aktiven Sensor 1, der als Raddrehzahlsensor ausgebildet ist und Anschlussleitungen 4 und 5 mit den Anschlüssen 41 und 51 aufweist, an welche zusätzliche Anschlussleitungen in Verlängerung der Anschlussleitungen 4 und 5 angeschlossen sind. Über diese zusätzlichen Anschlussleitungen ist aktiver Sensor 1 mit der elektronischen Kontrolleinheit ECU eines Kraftfahrzeugbremssystems verbunden. Über Anschlussleitungen 4 und 5 bzw. die Anschlussleitungen 4 und 5 in Verlängerung mit den zusätzlichen Anschlussleitungen wird das Sensorausgangssignal Out übertragen und die Versorgungsspannung USup wird an diesen Leitungen 4, 5 bereitgestellt. Durch die Polung der angelegten Versorgungsspannung wird beispielgemäß der Betriebsmodus des Sensors 1 eingestellt beziehungsweise umgeschaltet. Bei einer Polung "+" an "+" und "-" an "-" arbeitet der Sensor im Normalbetriebsmodus. Bei einer Polung "+" an "-" und "-" an "+" arbeitet der Sensor in einem Sonderbetriebsmodus bzw. beispielgemäß in einem Testbetriebsmodus.

Im Normalbetriebsmodus weist Sensorausgangssignal Out einen Stromwert in einem definierten Arbeits-Stromintervall auf, während im Sonderbetriebsmodus bzw. Testbetriebsmodus der Stromwert des Sensorausgangssignals Out in einem Fehlerband liegt, wodurch ein unbeabsichtigtes Verpolen im Normalbetrieb erkannt werden kann. Aktiver Sensor 1 umfasst ein Sensorelement 2, welches als AMR-Sensorbrücke ausgebildet ist, eine Auswerteschaltung 3 und ein Umschaltmodul 6. Sensorbrücke 2 erfasst die Rotationsbewegungen eines nicht dargestellten, mit einem Rad fest verbundenen, magnetischen Encoders bzw. das durch die Encoderbewegungen modulierte Magnetfeld. Zusätzlich weist Sensor 1 eine Überspannungsschutzeinheit 8 auf, damit Sensor 1 beim Anschluss an eine zu große Spannung nicht beschädigt wird. Umschaltmodul 6 zur Betriebsmodusumschaltung umfasst Brückengleichrichterschaltung 61, Moduskomparator 62 und eine Schaltereinrichtung 65. Moduskomparator 62 ist so mit Brückengleichrichterschaltung 61 verbunden, dass Moduskomparator 62 in Abhängigkeit der Polarität der Versorgungsspannung Sensors 1 schaltet oder nicht schaltet bzw. die Polung der Versorgungsspannung Sensors 1 erfasst. Gleichrichterschaltung 61 ist eingangsseitig mit Anschlussleitungen 4 und 5 verbunden und stellt ausgangsseitg eine gleichgerichtete Spannung als Versorgungsspannung für Moduskomparator 62, Auswerteschaltung 3 und Sensorelement 2 bereit. Auswerteschaltung 3 umfasst beispielgemäß zwei Stromquellen, welche ein Stromsignal definierter Amplitude für eine Schnittstellenschaltung 32 bereitstellen.

Des Weiteren umfasst Auswerteschaltung 3 eine Signalverarbeitungseinheit 31, welche die Ausgangssignale des Sensorelements 2 verarbeitet und ein digitales Wechselsignal erzeugt und ausgibt, das entsprechend den Encoderbewegungen moduliert ist. Darüber hinaus weist Auswerteschaltung 3 eine Referenzspannungseinheit 35 auf, welche der Signalverarbeitungseinheit 31, der Stromquelle 33 und einer Spannungsstabilisierungseinheit 34 eine Referenzspannung mit einem definiertem Spannungswert zur Verfügung stellt. Spannungsstabilisierungseinheit 34 besteht beispielgemäß aus einer Zenerdiode, mit welcher die Versorgungsspannung des Sensorelements 2 und beispielgemäß ebenfalls die Versorgungsspannung der Signalverarbeitungseinheit 31, welche parallel dazu geschaltet ist, auf einen im Wesentlichen konstanten, definierten Wert eingestellt wird. Im Normalbetrieb ist Schalter 322 geschlossen und Schalter 321 wird in Abhängigkeit des Ausgangssignals von Signalverarbeitungseinheit 31 betätigt. Hierdurch wird das Sensorausgangssignal Out erzeugt, welches zwischen 7mA und 14mA wechselt. Der Stromwert von 7mA ergibt sich dabei aus den 3mA von Stromquelle 33, zuzüglich der 3,5mA Stromquelle sowie weiterer 0,5mA sonstiger Stromaufnahmen. Der Stromwert von 14mA ergibt sich dann durch Zuschalten der 7mA-Stromquelle. Im Sonderbetriebsmodus, welcher durch Moduskomparator 62 erkannt wird, wird das Ausgangssignal der Signalverarbeitungseinheit 31 mittels Schaltereinrichtung 65 auf Schalter 322 umgeleitet, wogegen Schalter 321 nun geöffnet bleibt. Hierdurch wird ein Sensorausgangssignal Out des Sensors 1 erzeugt, welches zwischen 3,5mA und 7mA wechselt und der untere Pegel von 3,5mA damit bespielgemäß in einem Fehlerband liegt, wodurch ein versehentlich verpolt angeschlossener Sensor 1 von der elektronischen Kontrolleinheit ECU eindeutig erkannt werden kann.

Zusätzlich weist Sensor 1 eine elektrische Offsetquelle 7 auf, welche eingangsseitig mit Anschlussleitungen 4, 5 verbunden ist, also die Versorgungsspannung USup als eigene Versorgungsspannung aufweist und beispielgemäß als spannungsgesteuerte Doppel-Stromquelle ausgebildet ist. Die beiden Ausgangsleitungen sind über Offsetschalter 66, der von Moduskomparator 62 angesteuert wird, mit Signalverarbeitungseinheit 31 der Auswerteschaltung 3 verbunden. Dadurch wird beispielgemäß im Normalbetriebsmodus elektrische Offsetquelle 7 von Auswerteschaltung 3 getrennt und im Sonderbetriebsmodus mit dieser verbunden. Elektrische Offsetquelle 7 treibt die beiden Offsetströme $I_{Offset}$.

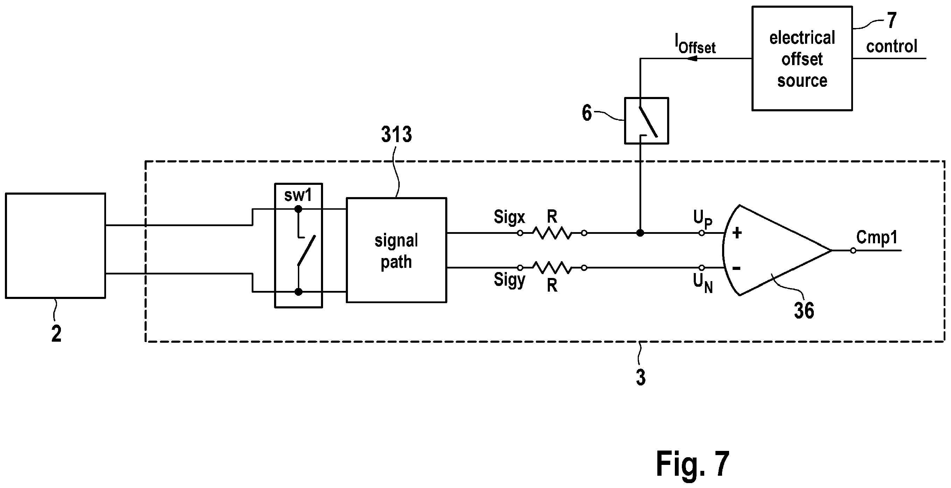

Beispielhafte Auswerteschaltung 3 in Fig. 7 umfasst ein erstes Komparatorelement 36 an welches eingangsseitig ein erstes internes Signal SigX und ein zweites internes Signal SigY angelegt werden, wobei SigX durch Offsetsignal $I_{Offset}$ der Offsetquelle 7, welche mittels Umschaltmodul 6 mit Auswerteschaltung 3 verbunden ist, überlagert werden kann, um den Signal-Offset zwischen SigX und SigY zu ermitteln. Auswerteschaltung 3 weist ein erstes Auswahlelement sw1 auf, mittels dem der Signal-Offset des Sensorelements 2 durch Schließen des Schalters sw1 eliminiert werden kann und lediglich der durch Verstärkerschaltung 313 verursachte Signal-Offset gemessen wird.

## Patentansprüche

1. Verfahren zur Bestimmung zumindest eines ersten internen Parameters eines Sensors (1) mit mindestens einem Sensorelement (2), einer Auswerteschaltung (3) und einem Umschaltmodul (6), wobei der Sensor (1) mittels des Umschaltmoduls (6) zwischen einem Normalbetriebsmodus und wenigstens einem Sonderbetriebsmodus umgeschaltet werden kann und zur Bestimmung des zumindest einen internen Parameters in den Sonderbetriebsmodus versetzt wird, wobei
der Sensor (1) eine elektrische Offsetquelle (7) aufweist, mit welcher im Sonderbetriebsmodus die Auswerteschaltung (3) wenigstens zur Bestimmung des ersten internen Parameters ($U_{Mess}$, Uoffset) zumindest teilweise angesteuert wird, **dadurch gekennzeichnet, dass** die Auswerteschaltung (3) wenigstens ein erstes Komparatorelement (36, 3112) umfasst, an dessen Eingängen ein erstes internes Signal (Sig1) und ein zweites internes Signal (Sig2) angelegt werden, welche die Information des ersten internen Parameters ($U_{Mess}$, $U_{Offset}$) aufweisen, wobei zumindest einem dieser beiden internen Signale ein von der elektrischen Offsetquelle (7) erzeugtes Offsetsignal ($I_{Offset}$) überlagert wird, wonach zumindest aus dem Ausgangssignal (Cmpl) des ersten Komparatorelements (36, 3112) wenigstens der erste interne Parameter ($U_{Mess}$, $U_{Off-set}$) des Sensors (1) direkt oder indirekt bestimmt wird, wobei das erste interne Signal (Sig1) ein erstes Sensorelementausgangssignal ist und das zweite interne Signal (Sig2) ein zweites Sensorelementausgangssignal oder ein Referenzsignal ist, wobei die Offsetquelle (7) so angesteuert wird, dass der Wert des von dieser Offsetquelle erzeugten Offsetsignals ($I_{Offset}$) in definierter Weise variiert wird, wodurch zumindest aus dem zeitlichen Verlauf und/oder dem Wert des Ausgangssignals des erstens Komparatorelements der erste interne Parameter ($U_{Mess}$, $U_{Offset}$) des Sensors direkt oder indirekt bestimmt wird.

2. Verfahren nach Anspruch 1, **dadurch gekennzeichnet, dass** als erster interner Parameter des Sensors die Signalamplitude eines Sensorelementdifferenzsignals ($U_{Mess}$) oder der Wert eines internen Differenzsignals oder ein Signal-Offset ($U_{Offset}$) des Sensorelements (2), bezüglich von zumindest zwei Teilsensorelementen oder einem Sensorelementausgangssignal zu einem Referenzsignal, ermittelt wird.

3. Verfahren nach Anspruch 1 oder 2, **dadurch gekennzeichnet, dass** der Sensor (1) als aktiver Sensor ausgebildet ist und mindestens zwei Anschlussleitungen (4, 5), insbesondere mit jeweils einem Anschluss (41, 51), aufweist, wobei in Abhängigkeit der an den zwei Anschlussleitungen anliegenden Versorgungsspannung (USup)des Sensors die elektrische Offsetquelle (7) so angesteuert wird, dass aus einem Sensorausgangssignal (Out) und/oder aus der an den zwei Anschlussleitungen (4, 5) anliegenden Versorgungsspannung (USup) in einer elektronischen Kontrolleinheit (ECU), welche an die zwei Anschlussleitungen (4, 5) des Sensors (1) angeschlossen ist, die Signalamplitude eines Sensorelementdifferenzsignals ($U_{M-ess}$) oder ein Signal-Offset ($U_{Offset}$) des Sensorelements ermittelt wird.

4. Verfahren nach mindestens einem der Ansprüche 1 bis 3, **dadurch gekennzeichnet, dass** das erste und das zweite Sensorelementausgangssignal oder das erste Sensorelementausgangssignal und das Referenzsignal dem ersten Komparatorelement (36, 3112) zugeführt werden und das erste und das zweite Sensorelementausgangssignal oder das zweite Sensorelementausgangssignal und das Referenzsignal dem zweiten Komparatorelement (3122) zugeführt werden, wobei die Werte der beiden, dem jeweiligen Komparatorelement zugeführten Signale jeweils direkt oder indirekt miteinander verglichen werden und wobei an einem Eingang (+) des ersten Komparatorelements und an einem Eingang (+) des zweiten Komparatorelements jeweils einem der zugeführten Signale das von der Offsetquelle (7) erzeugte Offsetsignal ($I_{Offset}$) überlagert wird.

5. Verfahren nach mindestens einem der Ansprüche 1 bis 4, **dadurch gekennzeichnet, dass** zur Ermittlung eines Signal-Offsets des Sensorelements (2) das durch die Offsetquelle (7) erzeugte Offsetsignal ($I_{Offset}$) variiert wird, bis das erste Komparatorelement (36) zweimal schaltet oder das erste und das zweite Komparatorelement (3112, 3122) jeweils zumindest einmal schalten, wonach aus dem Wert des Offsetsignals jeweils zu den Schaltzeitpunkten des einen oder der beiden Komparatorelemente und/oder der Differenz aus den Werten des Offsetsignals zu diesen Schaltzeitpunkten und/oder aus dem zeitlichen Abstand ($\Delta t$) der aufeinanderfolgenden Schaltvorgänge des einen (36) oder der beiden Komparatorelemente (3112, 3122) und/oder aus der zeitlichen Änderungen des Offsetsignalwerts der Offset ($U_{Offset}$) des Sensorelements (2) direkt oder indirekt bestimmt wird.

6. Verfahren nach mindestens einem der Ansprüche 2 bis 5, **dadurch gekennzeichnet, dass** zur Ermittlung des Sensorelementdifferenzsignals ($U_{Mess}$) die Bewegung eines Encoders durch das Sensorelement (2) erfasst wird, wobei der zeitliche Verlauf der Signalamplituden des ersten und/oder zweiten Sensorelementausgangssignals (SigA, SigB, Sig1, Sig2) jeweils von der Relativbewegungsgeschwindigkeit des Encoders zum Sensor (1) abhängen und insbesondere periodisch alternierend die Signalamplitude des einen Sensorelementausgangssignals größer ist als die Signalamplitude des anderen Sensorelementausgangssignals, und wobei das durch die Offsetquelle (7) erzeugte Offsetsignal ($I_{Offset}$) variiert oder in definierter Weise eingestellt wird.

7. Verfahren nach Anspruch 5, **dadurch gekennzeichnet, dass** das Offsetsignal ($I_{Offset}$) solange, insbesondere stetig, variiert wird, bis das Ausgangssignal (Cmp1, Cmp2) des ersten (36, 3112) und/oder eines anderen Komparatorelements (3122) konstant bleibt oder das erste und/oder das zweite Komparatorelement anfängt und/oder aufhört zu schalten, oder dass das durch die Offsetquelle erzeugte Offsetsignal ($I_{Offset}$) innerhalb eines definierten Werte-Intervalls ($\Delta I_{Offset}$) variiert wird, wonach das Sensorelementdifferenzsignal ($U_{Mess}$) wenigstens in Abhängigkeit des Wertes des Offsetsignals ($I_{Offset}$), bei welchem das erste und/oder das zweite Komparatorelement anfängt und/oder aufhört zu schalten, berechnet wird.

8. Verfahren nach den Ansprüchen 5 und 7, **dadurch gekennzeichnet, dass** zunächst der Signal-Offset ($U_{Offset}$) des Sensorelements (2) ermittelt wird und anschließend das Sensorelementdifferenzsignal ($U_{Mess}$), wobei im Zuge der Berechnung des Sensorelementdifferenzsignals der Signal-Offset des Sensorelements berücksichtigt wird.

9. Sensor (1) zur Bestimmung zumindest eines ersten internen Parameters, wobei der Sensor mindestens ein Sensorelement (2), eine Auswerteschaltung (3) und ein Umschaltmodul (6) aufweist, welches ein Umschalten des Sensors (1) zwischen einem Normalbetriebsmodus und zumindest einem Sonderbetriebsmodus durchführen kann, wobei

der Sensor (1) eine elektrische Offsetquelle (7) aufweist, welche direkt oder indirekt an die Auswerteschaltung (3) zumindest zur Bestimmung des ersten internen Parameters ($U_{Mess}$, $U_{Offset}$) angeschlossen ist, **dadurch gekennzeichnet, dass**

die Auswerteschaltung (3) zumindest ein erstes Komparatorelement (36, 3112) aufweist, an dessen Eingängen mindestens ein erstes (Sig1) und ein zweites (Sig2) internes Signal anliegen, wobei diese internen Signale die Information des mindestens ersten internen Parameters ($U_{Mess}$, $U_{Offset}$) aufweisen und wobei die Leitung eines dieser internen Signale mit der elektrischen Offsetquelle (7) direkt oder indirekt verbunden ist, wobei das erste interne Signal ein erstes Sensorelementausgangssignal ist und das zweite interne Signal ein Referenzsignal oder ein zweites Sensorelementausgangssignal und wobei

die Offsetquelle (7) mittels des Umschaltmoduls (6) mit der Auswerteschaltung (3) verbunden ist.

10. Sensor nach Anspruch 9, **dadurch gekennzeichnet, dass** der Sensor (1) wenigstens zwei Anschlussleitungen aufweist und über diese beiden Anschlussleitungen (4, 5) mit elektrischer Energie versorgt wird, wobei der Sensor (1) eine Spannungsversorgungsregelungseinheit (34) aufweist, welche eine im Wesentlichen auf einen definierten Spannungswert geregelte Versorgungsspannung (BRP) bereitstellt, und zumindest das Sensorelement (2) und zumindest Teile der Auswerteschaltung (3) an diese Spannungsversorgungsregelungseinheit (34) angeschlossen sind.

11. Sensor nach Anspruch 9 oder 10, **dadurch gekennzeichnet, dass** die Auswerteschaltung (3) wenigstens zwei Komparatorelemente (3112, 3122) umfasst, wobei jeweils an einem der Eingänge jedes der Komparatorelemente (3112, 3122) die elektrische Offsetquelle (7) über das Umschaltmodul (6) angeschlossen ist.

12. Sensor nach Anspruch 11, **dadurch gekennzeichnet, dass** die Auswerteschaltung (3) zwei Hystereseschaltungen (311, 312) aufweist, in denen ein erstes und ein zweites Sensorelementausgangssignal (SigA, SigB, Sig1, Sig2) des mindestens einen Sensorelements (2) verarbeitet werden, wobei diese beiden Hystereseschaltungen (311, 312) parallel geschaltet sind und die erste Hystereseschaltung das erste Komparatorelement (3112) umfasst und die zweite Hystereseschaltung das zweite Komparatorelement (3122), wobei an den Eingängen des ersten und zweiten Komparatorelements das erste Sensorelementausgangssignal und das zweite Sensorelementausgangssignal oder eines der beiden Sensorelementausgangssignale und ein Referenzsignal anliegen und wobei die Eingangssignale des ersten und zweiten Komparatorelements (3112, 3122) bezüglich des nichtinvertierenden (+) und des invertierenden (-) Eingangs zueinander vertauscht anliegen und jeweils ein Eingang des jeweiligen Komparatorelements, insbesondere der nichtinvertierende (+) Eingang, über das Umschaltmodul (6) mit der elektrischen Offsetquelle (7) verknüpft ist.

13. Sensor nach mindestens einem der Ansprüche 9 bis 12, **dadurch gekennzeichnet, dass** die Auswerteschaltung (3) eine Schnittstellenschaltung (32) zur Einstellung eines definierten Ausgangssignals (Out) der Sensors umfasst und diese Schnittstellenschaltung (32) in Abhängigkeit des jeweiligen Betriebsmodus angesteuert wird.

14. Sensor nach mindestens einem der Ansprüche 9 bis 13, **dadurch gekennzeichnet, dass** zumindest das erste Komparatorelement (36, 3112) ausgangsseitig an eine digitale Ausgangsschaltung (314) angeschlossen ist, welche zumindest eine Stromquelle (33) umfasst und das Sensorausgangssignal als ein digitales Stromsignal erzeugt.

15. Sensor nach mindestens einem der Ansprüche 9 bis 14, **dadurch gekennzeichnet, dass** die Auswerteschaltung (3) mindestens ein erstes Auswahlelement (sw1) aufweist, welches insbesondere als Schalter ausgebildet ist, wobei dieses erste Auswahlelement (sw1) so ausgebildet und angeschlossen ist, dass es wenigstens zwei Eingangssignalleitungen der Auswerteschaltung oder zwei interne Signalleitungen an zwei definierten Punkten innerhalb der Auswerteschaltung miteinander verbinden kann, und dass dadurch der Wert eines internen Differenzsignals bestimmt werden kann, zumindest im Wesentlichen abhängig von den im jeweiligen Signalpfad liegenden Teilen der Auswerteschaltung (3) zwischen dem ersten Auswahlelement (sw1) und dem ersten Komparatorelement (36).

16. Verwendung des Sensors gemäß mindestens einem der Ansprüche 9 bis 15, insbesondere als Raddrehzahlsensor, in Kraftfahrzeugen.

**Claims**

1. Method for determining at least one first internal parameter for a sensor (1) having at least one sensor element (2), an evaluation circuit (3) and a changeover module (6), wherein the sensor (1) can be changed over between a normal mode of operation and at least one special mode of operation by means of the changeover module (6) and is put into the special mode of operation for the purpose of determining the at least one internal parameter, wherein the sensor (1) has an electric offset source (7) which is used in the special mode of operation to at least partially actuate the evaluation circuit (3) at least for the purpose of determining the first internal parameter ($U_{Mess}$, $U_{Offset}$), **characterized in that** the evaluation circuit (3) comprises at least one first comparator element (36, 3112), the inputs of which have a first internal signal (Sig1) and a second internal signal (Sig2) applied to them which have the information from the first internal parameter ($U_{Mess}$, $U_{Offset}$), wherein an offset signal ($I_{Offset}$) produced by the electric offset source (7) is overlaid on at least one of these two internal signals, after which at least the first internal parameter ($U_{Mess}$, $U_{Offset}$) of the sensor (1) is determined directly or indirectly at least from the output signal (Cmp1) of the first comparator element (36, 3112), wherein the first internal signal (Sig1) is a first sensor element output signal and the second internal signal (Sig2) is a second sensor element output signal or a reference signal, wherein the offset source (7) is actuated such that the value of the offset signal ($I_{Offset}$) produced by this offset source is varied in a defined manner, as a result of which the first internal parameter ($U_{Mess}$, $U_{Offset}$) of the sensor is determined directly or indirectly at least from the time profile and/or the value of the output signal of the first comparator element.

2. Method according to Claim 1, **characterized in that** the first internal parameter ascertained for the sensor is the signal amplitude of a sensor element differential signal ($U_{Mess}$) or the value of an internal differential signal or a signal offset ($U_{Offset}$) of the sensor element (2), for at least two sensor element components or a sensor element output signal in relation to a reference signal.

3. Method according to Claim 1 or 2, **characterized in that** the sensor (1) is in the form of an active sensor and has at least two connecting lines (4, 5), particularly with a respective connection (41, 51), wherein the supply voltage (USup) for the sensor which is applied to the two connecting lines is taken as a basis for actuating the electric offset source (7) such that the signal amplitude of a sensor element differential signal ($U_{Mess}$) or a signal offset ($U_{Offset}$) of the sensor element is ascertained from a sensor output signal (Out) and/or from the supply voltage (USup) applied to the two connecting lines (4, 5) in an electronic control unit (ECU) which is connected to the two connecting lines (4, 5) of the sensor (1).

4. Method according to at least one of Claims 1 to 3, **characterized in that** the first and second sensor element output signals or the first sensor element output signal and the reference signal are supplied to the first comparator element (36, 3112), and the first and second sensor element output signals or the second sensor element output signal and the reference signal are supplied to the second comparator element (3122), wherein the values of the two signals supplied to the respective comparator element are respectively compared with one another directly or indirectly and wherein the offset signal ($I_{Offset}$) produced by the offset source (7) is respectively overlaid on one of the supplied signals at an input (+) of the first comparator element and at an input (+) of the second comparator element.

5. Method according to at least one of Claims 1 to 4, **characterized in that** for the purpose of ascertaining a signal offset for the sensor element (2), the offset signal ($I_{Offset}$) produced by the offset source (7) is varied until the first comparator element (36) switches twice or the first and second comparator elements (3112, 3122) each switch at least once, after which the offset ($U_{Offset}$) of the sensor element (2) is determined directly or indirectly from the value of the offset signal at the respective switching times of one or both comparator elements and/or from the difference between the values of the offset signal at these switching times and/or from the time interval ($\Delta t$) for the successive switching operations of one (36) or both comparator elements (3112, 3122) and/or from the changes in the offset signal value over time.

6. Method according to at least one of Claims 2 to 5, **characterized in that** for the purpose of ascertaining the sensor element differential signal ($U_{Mess}$), the movement of an encoder is captured by the sensor element (2), wherein the time profile of the signal amplitudes of the first and/or second sensor element output signal (SigA, SigB, Sig1, Sig2) is respectively dependent on the relative speed of movement of the encoder in relation to the sensor (1) and, in particular with periodic alternation, the signal amplitude of one sensor element output signal is larger than the signal amplitude of the other sensor element output signal, and wherein the offset signal ($I_{Offset}$) produced by the offset source (7) is varied or is set in a defined manner.

7. Method according to Claim 5, **characterized in that** the offset signal ($I_{Offset}$) is varied, in particular continually, until the output signal (Cmp1, Cmp2) of the first (36, 3112) and/or of another comparator element (3122) remains constant or the first and/or the second comparator element starts and/or stops switching, or **in that** the offset signal ($I_{Offset}$) produced by the offset source is varied within a defined value range ($\Delta I_{Offset}$), after which the sensor element differential signal ($U_{Mess}$) is calculated at least on the basis of the value of the offset signal ($I_{Offset}$) at which the first and/or the second comparator element starts and/or stops switching.

8. Method according to Claims 5 and 7, **characterized in that** first of all the signal offset ($U_{Offset}$) of the sensor element (2) is ascertained and then the senor element differential signal ($U_{Mess}$), wherein the signal offset of the sensor element is taken into account in the course of calculation of the sensor element differential signal.

9. Sensor (1) for determining at least one first internal parameter, wherein the sensor has at least one sensor element (2), an evaluation circuit (3) and a changeover module (6) which can perform changeover for the sensor (1) between a normal mode of operation and at least one special mode of operation, wherein
the sensor (1) has an electric offset source (7) which is connected directly or indirectly to the evaluation circuit (3) at least for the purpose of determining the first internal parameter ($U_{Mess}$, $U_{Offset}$), **characterized in that** the evaluation circuit (3) has at least one first comparator element (36, 3112), the inputs of which have at least one first (Sig1) and a second (Sig2) internal signal applied to them, wherein these internal signals have the information from the at least first internal parameter ($U_{Mess}$, $U_{Offset}$) and wherein the line for one of these internal signals is connected directly or indirectly to the electric offset source (7), wherein the first internal signal is a first sensor element output signal and the second internal signal is a reference signal or a second sensor element output signal and wherein the offset source (7) is connected to the evaluation circuit (3) by means of the changeover module (6).

10. Sensor according to Claim 9, **characterized in that** the sensor (1) has at least two connecting lines and is supplied with electric power via these two connecting lines (4, 5), wherein the sensor (1) has a voltage supply regulation unit (34) which provides a supply voltage (BRP) which is essentially regulated to a defined voltage value, and at least the sensor element (2) and at least portions of the evaluation circuit (3) are connected to this voltage supply regulation unit (34) .

11. Sensor according to Claim 9 or 10, **characterized in that** the evaluation circuit (3) comprises at least two comparator elements (3112, 3122), wherein a respective one of the inputs of each of the comparator elements (3112, 3122) has the electric offset source (7) connected via the changeover module (6).

12. Sensor according to Claim 11, **characterized in that** the evaluation circuit (3) has two hysteresis circuits (311, 312) in which a first and a second sensor element output signal (SigA, SigB, Sig1, Sig2) of the at least one sensor element (2) are processed, wherein these two hysteresis circuits (311, 312) are connected in parallel and the first hysteresis circuit comprises the first comparator element (3112) and the second hysteresis circuit comprises the second comparator element (3122), wherein the inputs of the first and second comparator elements have the first sensor element output signal and the second sensor element output signal or one of the two sensor element output signals and a reference signal applied to them and wherein the input signals of the first and second comparator elements (3112, 3122) are applied the other way around in respect of the noninverting (+) and the inverting (-) input, and a respective input of the respective comparator element, in particular the noninverting (+) input, is linked to the electric offset source (7) via the changeover module (6).

13. Sensor according to at least one of Claims 9 to 12, **characterized in that** the evaluation circuit (3) comprises an interface circuit (32) for setting a defined output signal (Out) of the sensors, and this interface circuit (32) is actuated on the basis of the respective mode of operation.

14. Sensor according to at least one of Claims 9 to 13, **characterized in that** at least the first comparator element (36, 3112) has its output connected to a digital output circuit (314) which comprises at least one current source (33) and produces the sensor output signal as a digital current signal.

15. Sensor according to at least one of Claims 9 to 14, **characterized in that** the evaluation circuit (3) has at least one first selection element (sw1) which is in the form of a switch, in particular, wherein this first selection element (sw1) is in a form and connected such that it can connect together at least two input signal lines of the evaluation circuit or two internal signal lines at two defined points within the evaluation circuit, and **in that** this allows the value of an internal differential signal to be determined, at least essentially on the basis of the portions of the evaluation circuit (3) which are situated in the respective signal path between the first selection element (sw1) and the first comparator element (36).

**16.** Use of the sensor according to at least one of Claims 9 to 15, in particular as a wheel speed sensor, in motor vehicles.

**Revendications**

**1.** Procédé pour déterminer au moins un premier paramètre interne d'un capteur (1) comprenant au moins un élément capteur (2), un circuit d'interprétation (3) et un module d'inversion (6), le capteur (1) pouvant être permuté au moyen du module d'inversion (6) entre un mode de fonctionnement normal et au moins un mode de fonctionnement spécial et étant placé dans le mode de fonctionnement spécial en vue de déterminer l'au moins un paramètre interne, le capteur (1) possédant une source de décalage électrique (7) avec laquelle, dans le mode de fonctionnement spécial, le circuit d'interprétation (3) est piloté au moins temporairement en vue de déterminer le premier paramètre interne ($U_{Mess}$, $U_{Offset}$), **caractérisé en ce que** le circuit d'interprétation (3) comporte au moins un premier élément comparateur (36, 3112) aux entrées duquel sont appliqués un premier signal interne (Sig1) et un deuxième signal interne (Sig2), lesquels possèdent les informations du premier paramètre interne ($U_{Mess}$, $U_{Offset}$), un signal de décalage ($I_{offset}$) généré par la source de décalage électrique (7) étant superposé à au moins l'un de ces deux signaux internes, après quoi au moins le premier paramètre interne ($U_{Mess}$, $U_{Offset}$) du capteur (1) est déterminé directement ou indirectement au moins à partir du signal de sortie (Cmp1) du premier élément comparateur (36, 3112), le premier signal interne (Sig1) étant un premier signal de sortie d'élément capteur et le deuxième signal interne (Sig2) étant un deuxième signal de sortie d'élément capteur ou un signal de référence, la source de décalage (7) étant pilotée de telle sorte que la valeur du signal de décalage ($I_{Offset}$) généré par cette source de décalage est soumis à une variation d'une manière donnée, ce par quoi le premier paramètre interne ($U_{Mess}$, $U_{Offset}$) du capteur est déterminé directement ou indirectement au moins à partir de la courbe dans le temps et/ou de la valeur du signal de sortie du premier élément comparateur.

**2.** Procédé selon la revendication 1, **caractérisé en ce que** le premier paramètre interne du capteur déterminé est l'amplitude de signal d'un premier signal différentiel d'élément capteur ($U_{Mess}$) ou la valeur d'un signal différentiel interne ou un décalage de signal ($U_{Offset}$) de l'élément capteur (2) concernant au moins deux éléments capteurs partiels ou signal de sortie d'élément capteur par rapport un signal de référence.

**3.** Procédé selon la revendication 1 ou 2, **caractérisé en ce que** le capteur (1) est réalisé sous la forme d'un capteur actif et possède au moins deux lignes de raccordement (4, 5), notamment pourvues respectivement d'une borne (41, 51), la source de décalage (7) étant pilotée en fonction de la tension d'alimentation (USup) aux deux lignes de raccordement de telle sorte que l'amplitude de signal d'un signal différentiel d'élément capteur ($U_{Mess}$) ou d'un décalage de signal ($U_{Offset}$) de l'élément capteur est déterminée à partir d'un signal de sortie de capteur (Out) et/ou à partir de la tension d'alimentation (USup) aux deux lignes de raccordement (4, 5) dans un module de contrôle électronique (ECU) qui est raccordé aux deux lignes de raccordement (4, 5) du capteur (1).

**4.** Procédé selon au moins l'une des revendications 1 à 3, **caractérisé en ce que** le premier et le deuxième signal de sortie d'élément capteur ainsi que le signal de référence sont acheminés au premier élément comparateur (36, 3112) et le premier et le deuxième signal de sortie d'élément capteur ainsi que le signal de référence sont acheminés au deuxième élément comparateur (3112), les valeurs des deux signaux acheminés à l'élément comparateur correspondant étant respectivement comparées entre elles directement ou indirectement et le signal de décalage ($I_{Offset}$) généré par la source de décalage électrique (7) étant respectivement superposé à l'un des signaux acheminés à une entrée (+) du premier élément comparateur et à une entrée (+) du deuxième élément comparateur.

**5.** Procédé selon au moins l'une des revendications 1 à 4, **caractérisé en ce que** pour la détermination d'un décalage du signal de l'élément capteur (2), le signal de décalage ($I_{Offset}$) généré par la source de décalage (7) est soumis à une variation jusqu'à ce que le premier élément comparateur (36) commute deux fois ou que le premier et le deuxième éléments comparateurs (3112, 3122) commutent respectivement une fois, après quoi le décalage ($U_{Offset}$) de l'élément capteur (2) est déterminé directement ou indirectement à partir de la valeur du signal de décalage respectivement aux moments de commutation de l'un ou des deux éléments comparateurs et/ou de la différence des valeurs du signal de décalage à ces moments de commutation et/ou à partir de l'écart dans le temps ($\Delta t$) des opérations de commutation successives de l'un (36) ou des deux éléments comparateurs (3112, 3122) et/ou des modifications dans le temps de la valeur du signal de décalage.

**6.** Procédé selon au moins l'une des revendications 2 à 5, **caractérisé en ce que** pour la détermination du signal différentiel d'élément capteur ($U_{Mess}$), le mouvement d'un codeur est détecté par l'élément capteur (2), la courbe dans le temps des amplitudes de signal du premier et/ou du deuxième signal de sortie d'élément capteur (SigA, SigB, Sig1, Sig2) dépendant respectivement de la vitesse de mouvement relative du codeur par rapport au capteur (1) et l'amplitude de signal de l'un des signaux de sortie d'élément capteur étant, notamment en alternance périodique, supérieure à l'amplitude de signal de l'autre signal de sortie d'élément capteur, et le signal de décalage ($I_{Offset}$) généré par la source de décalage électrique (7) étant soumis à une variation ou réglé d'une manière définie.

7. Procédé selon la revendication 5, **caractérisé en ce que** le signal de décalage ($I_{Offset}$) est soumis à une variation, notamment continue, jusqu'à ce que le signal de sortie (Cmp1, Cmp2) du premier (36, 3112) et/ou d'un autre élément comparateur (3122) reste constant ou le premier et/ou le deuxième élément comparateur commence et/ou arrête de commuter, ou **en ce que** le signal de décalage ($I_{Offset}$) généré par la source de décalage électrique est soumis à une variation à l'intérieur d'un intervalle de valeurs ($\Delta I_{Offset}$) donné, après quoi le signal différentiel d'élément capteur ($U_{Mess}$) est calculé au moins en fonction de la valeur du signal de décalage ($I_{Offset}$) à laquelle le premier et/ou le deuxième élément comparateur commence et/ou arrête de commuter.

8. Procédé selon les revendications 5 et 7, **caractérisé en ce que** le décalage de signal ($U_{Offset}$) de l'élément capteur (2) est tout d'abord déterminé, et ensuite le signal différentiel d'élément capteur ($U_{Mess}$), le décalage de signal de l'élément capteur étant pris en compte au cours du calcul du signal différentiel d'élément capteur.

9. Capteur (1) destiné à déterminer au moins un premier paramètre interne, le capteur comprenant au moins un élément capteur (2), un circuit d'interprétation (3) et un module d'inversion (6), lequel pouvant effectuer une permutation du capteur (1) entre un mode de fonctionnement normal et au moins un mode de fonctionnement spécial, le capteur (1) possédant une source de décalage électrique (7), laquelle est raccordée directement ou indirectement au circuit d'interprétation (3) en vue de déterminer le premier paramètre interne ($U_{Mess}$, $U_{Offset}$), **caractérisé en ce que** le circuit d'interprétation (3) possède au moins un premier élément comparateur (36, 3112) aux entrées duquel sont appliqués au moins un premier (Sig1) et un deuxième (Sig2) signal interne, ces signaux internes possédant les informations de l'au moins premier paramètre interne ($U_{Mess}$, $U_{Offset}$), et la ligne de l'un de ces signaux internes étant reliée directement ou indirectement à la source de décalage électrique (7), le premier signal interne étant un premier signal de sortie d'élément capteur et le deuxième signal interne un signal de référence ou un deuxième signal de sortie d'élément capteur, et la source de décalage (7) étant reliée au circuit d'interprétation (3) au moyen du module d'inversion (6) .

10. Capteur selon la revendication 9, **caractérisé en ce que** le capteur (1) possède au moins deux lignes de raccordement et il est alimenté en énergie électrique par le biais de ces deux lignes de raccordement (4, 5), le capteur (1) possédant une unité de régulation d'alimentation électrique (34) qui délivre une tension d'alimentation (BRP) régulée sensiblement à une valeur de tension définie, et au moins l'élément capteur (2) et au moins des parties du circuit d'interprétation (3) sont raccordés à cette unité de régulation d'alimentation électrique (34).

11. Capteur selon la revendication 9 ou 10, **caractérisé en ce que** le circuit d'interprétation (3) comporte au moins deux éléments comparateurs (3112, 3122), la source de décalage électrique (7) étant raccordée respectivement à l'une des entrées des éléments comparateurs (3112, 3122) par le biais du module d'inversion (6).

12. Capteur selon la revendication 11, **caractérisé en ce que** le circuit d'interprétation (3) possède deux circuits d'hystérésis (311, 312) dans lequel sont traités un premier et un signal de sortie d'élément capteur (SigA, SigB, Sig1, Sig2) de l'au moins un élément capteur (2), ces deux circuits d'hystérésis (311, 312) étant branchés en parallèle et le premier circuit d'hystérésis comportant le premier élément comparateur (3112) et le deuxième circuit d'hystérésis le deuxième élément comparateur (3122), le premier signal de sortie d'élément capteur et le deuxième signal de sortie d'élément capteur ou alors l'un des deux signaux de sortie d'élément capteur et un signal de référence étant appliqués aux entrées du premier et du deuxième élément comparateur et les signaux d'entrée du premier et du deuxième élément comparateur (3112, 3122) étant appliqués échangés l'un par rapport à l'autre concernant l'entrée non inverseuse (+) et l'entrée inverseuse (-) et respectivement une entrée de l'élément comparateur correspondant, notamment l'entrée non inverseuse (+), étant combinée logiquement avec la source de décalage électrique (7) par le biais du module d'inversion (6).

13. Capteur selon au moins l'une des revendications 9 à 12, **caractérisé en ce que** le circuit d'interprétation (3) comporte un circuit d'interface (32) destiné à régler un signal de sortie défini (Out) du capteur et ce circuit d'interface (32) est piloté en fonction du mode de fonctionnement respectif.

14. Capteur selon au moins l'une des revendications 9 à 13, **caractérisé en ce qu'**au moins le premier élément comparateur (36, 3112) est raccordé du côté de la sortie à un circuit de sortie numérique (314), lequel comporte au moins une source de courant (33) et génère le signal de sortie de capteur sous la forme d'un signal de courant numérique.

15. Capteur selon au moins l'une des revendications 9 à 14, **caractérisé en ce que** le circuit d'interprétation possède au moins un premier élément de sélection (sw1), lequel est notamment réalisé sous la forme d'un commutateur, ce premier élément de sélection (sw1) étant configuré et raccordé de telle sorte qu'il peut relier ensemble au moins deux lignes de signal d'entrée du circuit d'interprétation ou deux lignes de signal internes à deux points définis à l'intérieur du circuit d'interprétation, et **en ce que** la valeur d'un signal différentiel interne peut ainsi être déterminée, au moins sensiblement en fonction des parties du circuit d'interprétation (3) qui se trouvent dans le trajet de signal correspondant entre le premier élément de sélection (sw1) et le premier élément comparateur (36) .

16. Utilisation du capteur selon au moins l'une des revendications 9 à 15, notamment en tant que capteur de vitesse de rotation de roue dans les véhicules automobiles.

Fig. 1

Fig. 2

Fig. 3

EP 2 288 874 B1

Fig. 4

EP 2 288 874 B1

Fig. 5

EP 2 288 874 B1

Fig. 6

Fig. 7

**IN DER BESCHREIBUNG AUFGEFÜHRTE DOKUMENTE**

**In der Beschreibung aufgeführte Patentdokumente**

- DE 4434978 A1
- DE 10203483 A1
- US 4902970 A